# EUROPÄISCHE PATENTSCHRIFT

(11) **EP 3 436 383 B1**
(45) Veröffentlichungstag und Bekanntmachung des Hinweises auf die Patenterteilung: **06.01.2021**
(21) Anmeldenummer: 17713026.7
(22) Anmeldetag: 28.03.2017
(51) Int. Cl.: B66B 1/34, H04L 12/423

(54) **AUFZUGANLAGE MIT ZENTRALER STEUEREINHEIT UND MEHREREN FELDGERÄTEN, WELCHE ÜBER EIN SUMMENRAHMENVERFAHREN KOMMUNIZIEREN**
LIFT SYSTEM WITH CENTRAL CONTROL UNIT AND A PLURALITY OF FIELD DEVICES COMMUNICATING OVER A SUM FRAME METHOD
ASCENSEUR COMPRENANT UNE UNITE DE COMMANDE CENTRALE ET PLUSIEURS APPAREILS DE CHAMP COMMUNIQUANT SELON UN PROCEDE DE TRAME UNIQUE

(30) Priorität: 30.03.2016 EP 16163020
(43) Veröffentlichungstag der Anmeldung: 06.02.2019
(73) Patentinhaber: Inventio AG, 6052 Hergiswil (CH)
(72) Erfinder: SONNENMOSER, Astrid, 6280 Hochdorf (CH); MICHEL, David, 6343 Rotkreuz (CH); ROUSSEL, Frank Olivier, 6006 Luzern (CH); LUSTENBERGER, Ivo, 6018 Buttisholz (CH); HEINZ, Kurt, 8107 Buchs (CH); HARTMANN, Thomas, 6277 Kleinwangen (CH); HESS, Martin, 6340 Baar (CH)
(86) Internationale Anmeldenummer: PCT/EP2017/057262
(87) Internationale Veröffentlichungsnummer: WO 2017/167720

(56) Entgegenhaltungen:
- EP-A1- 2 961 106
- EP-A2- 0 755 012
- WO-A1-2011/001197
- US-A1- 2009 299 503

## Beschreibung

Die vorliegende Erfindung betrifft eine Aufzuganlage, bei der beispielsweise in einem Aufzugschacht mehrere Feldgeräte wie z.B. Türschalter, Sicherheitsschalter, o.ä. vorgesehen sind, welche mit einer zentralen Steuereinheit kommunizieren.

Aufzuganlagen dienen im Allgemeinen dazu, Personen beispielsweise innerhalb eines Bauwerks zwischen verschiedenen Stockwerken befördern zu können. Hierzu kann im Regelfall eine Aufzugskabine innerhalb eines meist vertikalen Aufzugschachts verlagert werden. Wenn die Aufzugskabine ein gewünschtes Stockwerk erreicht hat, kann eine Aufzugtür und gegebenenfalls mit ihr eine zugehörige Stockwerktür geöffnet werden, um Personen einen Zutritt zu der Aufzugskabine bzw. ein Verlassen der Aufzugskabine zu ermöglichen.

Funktionen der Aufzuganlage wie beispielsweise ein Betätigen ihres die Aufzugskabine verlagernden Antriebs werden meist von einer zentralen Steuereinheit gesteuert. Die zentrale Steuereinheit kann dabei beispielsweise Informationen berücksichtigen, die sie durch Verarbeiten von Sensorsignalen erhalten kann. Die Funktionen der Aufzugsanlage können auch von mehr als einer Steuereinheit gesteuert werden, beispielsweise von einer Steuereinheit, die unter anderem den Antrieb ansteuert und einer weiteren Steuereinheit, die Sicherheitsfunktionen überwacht. Nachfolgend soll unter einer zentralen Steuereinheit jede Steuereinheit verstanden werden, die Sensorsignale verarbeitet und/oder Steuersignale erzeugt. Die Sensorsignale können insbesondere von Geräten wie zum Beispiel Türschaltern oder anderen Sicherheitsschaltern stammen, welche in dem die Aufzuganlage aufnehmenden Bauwerk verteilt angeordnet sind. Solche Geräte werden hierin nachfolgend als Feldgeräte bezeichnet. Ferner kann die Steuereinheit selbst Steuersignale erzeugen und an innerhalb des Bauwerks verteilt angeordnete andere Geräte, die beispielsweise über die Steuersignale umsetzende Aktoren verfügen können, übertragen. Auch solche Geräte sollen hier nachfolgend als Feldgeräte bezeichnet werden.

EP 2 251 293 A1 beschreibt eine herkömmliche Aufzugsteuervorrichtung mit einer Feldbus-Schnittstelle.

WO 2011/001197 A1 beschreibt eine Aufzugsteuervorrichtung, welche mit mehreren Feldgeräten über einen CAN-Bus kommuniziert.

Da ein korrektes Steuern der Funktionen der Aufzuganlage im Allgemeinen essenziell für eine Sicherheit der Aufzuganlage ist, kann ein Bedarf an einer Aufzuganlage bestehen, bei der eine Kommunikation zwischen einer zentralen Steuereinheit und mehreren Feldgeräten der Aufzuganlage schnell und zuverlässig durchgeführt werden kann. Ferner kann ein Bedarf daran bestehen, eine Aufzuganlage derart auszugestalten, dass ihre Steuereinheit und ihre Feldgeräte einfach und/oder kostengünstig installiert und/oder gewartet werden können.

Einem solchen Bedarf kann mit einer Aufzuganlage gemäß dem unabhängigen Patentanspruch entsprochen werden. Vorteilhafte Ausführungsformen sind in den abhängigen Patentansprüchen sowie der nachfolgenden Beschreibung dargelegt.

Ein Aspekt der vorliegenden Erfindung betrifft eine Aufzuganlage, welche eine zentrale Steuereinheit, eine Mehrzahl von Feldgeräten und ein Feldbussystem aufweist. Die zentrale Steuereinheit ist dazu ausgelegt, Steuersignale zu erzeugen und/oder Sensorsignale zu verarbeiten und Funktionen der Aufzuganlage zu steuern. Die Feldgeräte sind innerhalb eines die Aufzuganlage aufnehmenden Bauwerks verteilt angeordnet, insbesondere vorzugsweise entlang eines Aufzugschachts verteilt angeordnet. Jedes Feldgerät ist dazu eingerichtet, von einem Sensor erzeugte Sensorsignale einzulesen und auf einen Feldbus auszugeben und/oder von einem angeschlossenen Aktor umzusetzende Steuersignale über einen Feldbus zu empfangen. Ein Sensor und/oder ein Aktor können dabei in das Feldgerät integriert sein oder extern angeordnet und mit dem Feldgerät signalübertragungsfähig verbunden sein. Das Feldbussystem ist mit einer Topologie aus elektrischen Leitungen zum Austausch von Sensorsignalen und/oder Steuersignalen zwischen der zentralen Steuereinheit und den Feldgeräten ausgelegt. Die Feldgeräte, die zentrale Steuereinheit und das Feldbussystem sind dabei mit einer geschlossenen Ringtopologie speziell dazu ausgelegt, um ein die Sensorsignale und/oder Steuersignale umfassendes Datenpaket seriell zwischen der zentralen Steuereinheit und allen Feldgeräten mit einem sogenannten Summenrahmenverfahren auszutauschen. Jedes der Feldgeräte weist dabei einen Treiber auf, um die Sensorsignale in das Datenpaket einzufügen bzw. um die Steuersignale aus dem Datenpaket zu entnehmen. Es ist auch möglich, dass zusätzlich zur zentralen Steuereinheit eine weitere Steuereinheit in das Feldbussystem eingebunden ist, das keine Sensorsignale ausgibt und keine Steuersignale empfängt, sondern ebenfalls Sensorsignale auswertet und gegebenenfalls Steuersignale erzeugt.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Wie einleitend kurz angemerkt, gibt es bereits in herkömmlichen Aufzuganlagen meist eine Vielzahl von Feldgeräten, die dazu ausgelegt sind, Betriebszustände der Aufzuganlage sensorisch zu erfassen und/oder mithilfe von Aktoren aktiv zu beeinflussen. Meist sind diese Feldgeräte herkömmlich einfach aufgebaut. Beispielsweise können einfache Türschalter dazu vorgesehen sein, zu erkennen, ob eine Aufzugtür oder eine Stockwerktür aktuell offen oder geschlossen ist. Die Türschalter wirken dabei als Sensoren mit im Regelfall nur zwei Zuständen, offen oder geschlossen. Ergänzend zu solchen Türschaltern kann in einer Aufzuganlage noch eine Vielzahl anderer sensorisch wirkender Feldgeräte vorgesehen sein, beispielsweise um erfassen zu können, ob ein seilartiges Tragmittel der Aufzuganlage aktuell mechanisch gespannt ist oder schlaff durchhängt (sogenannte Schlaffseilschalter), ob Hilfsgeräte wie beispielsweise Leitern in dem Aufzugschacht korrekt aufgeräumt sind, etc.

Insbesondere eine Sicherheit der Aufzuganlage überwachende Sensoren und Schalter können in einem sogenannten herkömmlichen oder klassischen Sicherheitskreis der Aufzuganlage miteinander verbunden sein. Beispielsweise können Türschalter und andere sicherheitsüberwachende Sensoren seriell miteinander verschaltet sein. Der Sicherheitskreis ist in einem solchen Fall ausschließlich dann vollständig geschlossen, wenn z.B. alle Türschalter geschlossen sind. Die damit einhergehende Information, dass alle Stockwerktüren und Aufzugtüren geschlossen sind, kann über den Sicherheitskreis somit einfach an die zentrale Steuereinheit geleitet werden, welche daraufhin beispielsweise ein Verfahren der Aufzugskabine mithilfe des Antriebs der Aufzuganlage zulassen und steuern kann. Sobald mindestens ein Türschalter öffnet und damit eine nicht vollständig geschlossene Stockwerktür oder Aufzugtür angibt, wird der gesamte Sicherheitskreis geöffnet und die zentrale Steuereinheit verhindert daraufhin ein weiteres Verfahren der Aufzugskabine durch geeignetes Ansteuern des Antriebs.

Allerdings ist es bei einer Verwendung herkömmlicher, lediglich binäre Zustände erfassender Türkontakte beispielsweise innerhalb eines herkömmlichen Sicherheitskreises im Regelfall nicht möglich, zu erkennen, welche Stockwerk- oder Aufzugtür aktuell geöffnet wurde und damit der dortige Türschalter in seinen offenen Zustand versetzt wurde. Auch kann nicht unterschieden werden, ob der Sicherheitskreis beispielsweise geöffnet wurde, weil einer der Türschalter in seinen geöffneten Zustand versetzt wurde, oder ob dies geschehen ist, weil beispielsweise eine in dem Aufzugschacht zu lagernde Leiter nicht korrekt aufgeräumt wurde und damit der dortige Sicherheitsschalter, der ebenfalls Teil des Sicherheitskreises ist, geöffnet bleibt.

Dementsprechend kann bei einer Verwendung von solchen" einfach gestalteten Schaltern, Sensoren oder anderen Feldgeräten in herkömmlichen Sicherheitskreisen beispielsweise nicht fallspezifisch entschieden werden, wie auf ein Unterbrechen des Sicherheitskreises reagiert werden soll. Während beispielsweise bei einer nicht korrekt aufgeräumten Leiter ein Verfahren der Aufzugskabine zumindest in dieser Leiter entfernt liegenden Bereichen des Aufzugschachts durchaus noch zulässig sein kann, sollte für den Fall, dass eine Stockwerktür nicht korrekt geschlossen ist, sofort ein fahrender Betrieb der Aufzuganlage gestoppt werden.

Auch eine Fehleranalyse für den Fall, dass beispielsweise einer der in einem Sicherheitskreis enthaltenen Schalter oder sonstiger Feldgeräte defekt sein sollte, kann sich bei einfach gestalteten Feldgeräten in herkömmlichen Sicherheitskreisen als schwierig und zeitaufwendig erweisen, da eventuell alle Feldgeräte inspiziert werden müssen.

Es wurde daher als vorteilhaft erkannt, Feldgeräte für den Einsatz in Aufzuganlagen "intelligenter" auszugestalten bzw. intelligenter miteinander und mit einer Steuereinheit zu verbinden und kommunizieren zu lassen.

Beispielsweise können die Feldgeräte dazu ausgelegt sein, im Falle, dass ein Feldgerät Sensorsignale von einem Sensor ausgeben soll, die Sensorsignale in einer Weise bereitzustellen oder in das Datenpaket einzufügen, dass sie den Sensor identifizieren. Im Falle, dass ein Feldgerät von einem Aktor umzusetzende Steuersignale empfangen soll, kann das Feldgerät dazu ausgebildet sein, den Aktor identifizierende Steuersignale aus dem Datenpaket aufzunehmen und auszuwerten.

Mit anderen Worten kann ein Sensordaten ausgebendes Feldgerät die Sensordaten nicht lediglich "dumm" erzeugen und an eine Steuereinheit weitergeben, sondern das Feldgerät kann die Sensordaten in einer Weise erzeugen und/oder an die Steuereinheit weiterleiten, sodass die Steuereinheit erkennen kann, von welchem der Vielzahl von Feldgeräten diese konkreten Daten stammen. Hierzu kann das Feldgerät die Daten beispielsweise an einer für das konkrete Feldgerät spezifischen Position in das Datenpaket des Summenrahmens einfügen, sodass die Steuereinheit aus der Position, an der sich Sensordaten in dem Datenpaket befinden, erkennen kann, von welchem Feldgerät diese Sensordaten stammen. Alternativ oder ergänzend kann das Feldgerät die Sensordaten in einer für dieses konkrete Feldgerät einzigartigen Weise bereitstellen oder modifizieren, sodass die Steuereinheit anhand der Art und Ausgestaltung der Sensordaten erkennen kann, von welchem Feldgerät konkrete Daten stammen.

Analog können Steuerdaten in dem Datenpaket an einer Position und/oder in einer Weise integriert sein, sodass ein diese Steuerdaten aufnehmendes und auswertendes Feldgerät erkennen kann, dass bestimmte in dem Datenpaket des Summenrahmens enthaltene Steuerdaten gerade für dieses konkrete Feldgerät bereitgestellt wurden.

Das Vorsehen einer solchen Möglichkeit einer Identifizierung bzw. Authentifizierung einzelner Feldgeräte gegenüber der Steuereinheit kann im Allgemeinen sowohl eine fallspezifische Aktion bzw. Reaktion als auch eine vereinfachte Fehleranalyse ermöglichen.

Die Identifizierung eines konkreten Feldgeräts, von dem Sensordaten stammen bzw. an das Steuerdaten zu liefern sind, kann anhand einer Position erfolgen, an der die Sensordaten bzw. Steuerdaten in das Datenpaket aufgenommen sind. Jede mögliche Position ist dabei eindeutig einem der Feldgeräte zuzuordnen.

Alternativ können die den Sensor bzw. den Aktor identifizierenden Signale beispielsweise einem Feldgerät eindeutig zuzuordnende Identifizierungscodes sein, die z.B. in dem Feldgerät selbst abgespeichert sein können und bei Bedarf von dem Feldgerät ausgelesen und/oder an die Steuereinheit weitergeleitet werden können.

Beispielsweise können die Feldgeräte dazu ausgelegt sein, zusätzlich zu den Sensorsignalen weitere Signale zu erzeugen bzw. zusätzlich zu den Steuersignalen weitere Signale aufzunehmen und auszuwerten. Mit anderen Worten kann vorgesehen sein, dass ein als Sensor wirkendes Feldgerät nicht lediglich seine Sensorsignale erzeugt und an die zentrale Steuereinheit weitergibt, sondern zusätzlich auch noch andere Signale erzeugt, die beispielsweise eine fallspezifische Reaktion oder eine Fehleranalyse ermöglichen. Ähnlich können Feldgeräte, die mit Aktoren versehen sind, zusätzlich zu den Steuersignalen auch weitere Signale aufnehmen und auswerten, um beispielsweise gezielt von der Steuereinheit angesprochen werden zu können oder zum Beispiel fallspezifische Aktionen vornehmen zu können.

Eine Verwendung von "intelligenteren" Feldgeräten bzw. deren intelligente Einbindung in ein Feldbussystem kann auch angesichts der Tatsache vorteilhaft sein, dass Aufzuganlagen zunehmend in immer größeren Gebäuden eingesetzt werden und dabei beispielsweise immer höheren Sicherheitsanforderungen gerecht werden müssen. Aufgrund der Größe solcher Aufzuganlagen ist darin eine große Anzahl von Feldgeräten vorzusehen, welche zuverlässig überwacht werden müssen. Insbesondere im Fall von Fehlfunktionen kann es bei einer derart großen Anzahl von Feldgeräten schwierig sein, defekte Feldgeräte zu identifizieren. Außerdem müssen die Feldgeräte in einer räumlich großen Aufzuganlage oft über weite Distanzen hin zu der zentralen Steuereinheit verbunden werden und ihre Sensorsignale bzw. Steuersignale müssen über weite Distanzen zuverlässig übermittelt werden können.

Daher können in modernen Aufzuganlagen Feldbussysteme vorgesehen sein, bei denen eine Topologie aus elektrischen Leitungen dazu dient, Sensorsignale und/oder Steuersignale zwischen der Steuereinheit und den Feldgeräten auszutauschen. Solche Feldbussysteme sind im Allgemeinen physikalisch ausgeprägte Bussysteme, welche insbesondere für die Automatisierung, Fertigungstechnik, Gebäudeautomation und/oder die Automotive-Technik entwickelt wurden. Es handelt sich dabei meist um leitungsgebundene serielle Bussysteme, mit denen Feldgeräte mit Steuereinheiten oder so genannten Leitrechnern verbunden werden können und über die ein schneller Datenaustausch zwischen den Komponenten erfolgen kann. Die Feldbusse arbeiten hierbei meistens in einem Master-Slave-Betrieb, bei dem eine Steuereinheit in Form einer Masterstation die Steuerung von Prozessen und Protokollen übernimmt und eine oder mehrere Feldgeräte in Form von Slave-Stationen eine Abarbeitung von Aufgaben übernehmen.

Bezogen auf Aufzuganlagen kann das Feldbussystem dazu ausgelegt sein, zum Beispiel von der Steuereinheit erzeugte Steuersignale geeignet an Feldgeräte weiterzuleiten, damit diese die Steuersignale dort an die Steuersignale umsetzende Aktoren weitergeben können. Alternativ oder ergänzend kann das Feldbussystem dazu eingerichtet sein, von Feldgeräten, die über einen integrierten Sensor verfügen oder mit einem externen Sensor verbunden sind, Sensorsignale aufzunehmen und geeignet an die zentrale Steuereinheit weiterzuleiten. Das Feldbussystem kann außerdem dazu ausgelegt sein, Testsignale beispielsweise für den Test der Funktionsfähigkeit einzelner Feldgeräte weiter zu leiten.

Feldbussysteme können sich insbesondere hinsichtlich ihrer Topologie, ihrer zur Signalübertragung eingesetzten Medien und den von ihnen eingesetzten Übertragungsprotokollen unterscheiden. Unter anderem wird zwischen nachrichtenorientierten Verfahren und dem sogenannten Summenrahmenverfahren unterschieden. Außerdem werden einsetzbare Topologien in Ringtopologien, Baumtopologien, Bustopologien oder Sterntopologien unterschieden.

Es wurde nun in nicht naheliegender Weise erkannt, dass für den Einsatz in Aufzuganlagen Feldbussysteme und zugehörige Feldgeräte bzw. die zugehörige zentrale Steuereinheit vorteilhafterweise mit einer geschlossenen Ringtopologie implementiert werden und dazu ausgelegt sein sollten, Datenpakete, die die Sensorsignale und/oder Steuersignale umfassen, seriell zwischen der zentralen Steuereinheit und allen Feldgeräten in einem Summenrahmenverfahren auszutauschen. Jedes der Feldgeräte sollte dabei mithilfe eines Treibers in die Lage versetzt werden, die von ihm zu liefernden Sensorsignale in das Datenpaket individuell einzufügen bzw. die von ihm umzusetzenden Steuersignale individuell aus dem Datenpaket zu entnehmen. Ein im Rahmen eines entsprechend ausgebildeten Datenübertragungsprotokoll zu übertragendes Datenpaket wird auch als Summenrahmen bezeichnet, da bei ihm eine Summe von Signaldaten mehrerer Feldgeräte in einem gemeinsamen Datenpaket zusammengefasst sind.

Unter dem Summenrahmenverfahren kann in diesem Zusammenhang ein Verfahren verstanden werden, bei dem die zentrale Steuereinheit und alle mit Sensoren bzw. Aktoren verbundenen Feldgeräte in einer logischen Ringtopologie miteinander verbunden sind und ein Datenfluss in einer Richtung erfolgt, ähnlich wie bei einem Schieberegister. Die Daten werden dabei nacheinander von Teilnehmer zu Teilnehmer durch den gesamten Ring geschoben. Ein zu übertragendes Datenpaket bzw. ein Datenblock enthält hierbei die Daten bzw. Signale für alle Feldgeräte und hat einen vorzugsweise relativ geringen Overhead, der aus einem Loopback, den eigentlichen Sensor- bzw. Aktordaten und einem optionalen Prüfsummenfeld besteht. Ein solches Datenpaket oder Datenrahmen, der alle Teilnehmerdaten beinhaltet, wird als Summenrahmen bezeichnet. Der Summenrahmen beginnt dabei typischerweise mit dem Loopback. Wenn dieser durch den gesamten Ring geschoben wurde und im Empfangsregister der zentralen Steuereinheit ansteht, liegen alle Teilnehmerdaten, das heißt im vorliegenden Fall alle Daten der Feldgeräte der Aufzuganlage, bei der zentralen Steuereinheit. Ein Übergabe-Impuls kann eine Übergabe der Teilnehmerdaten an die jeweiligen Aktoren bzw. die Übernahme der Sensordaten von den jeweiligen Sensoren in den Schieberegisterring synchronisieren.

Die Verwendung einer Ringtopologie bei dem eingesetzten Feldbussystem sowie der Einsatz des Summenrahmenverfahrens ermöglichen bei Aufzuganlagen insbesondere bei einer Implementierung sicherheitsrelevanter Aufgaben beispielsweise, eine Antwortzeit kurzzuhalten. Beispielsweise kann eine Zeitdauer zwischen einem Zeitpunkt, zu dem ein als Feldgerät dienender Türkontakt ein Öffnen einer Stockwerktüre detektiert, und einem Zeitpunkt, zu dem diese Information an die zentralen Steuereinheit weitergeleitet wurde und dort geeignet verarbeitet werden kann, sehr kurzgehalten werden. Auch Ausfälle oder Defekte bei einzelnen Teilnehmern des Feldbussystems, das heißt bei einzelnen in die Ringtopologie aufgenommenen Feldgeräten, können schnell und vorzugsweise Gerätespezifisch erkannt werden.

Die Feldgeräte sind in einer Sequenz hintereinander angeordnet. Beispielsweise können die Feldgeräte entlang des Aufzugschachts in einer Sequenz räumlich hintereinander angeordnet sein. Die Feldgeräte können jedoch auch lediglich bezüglich eines Signalübertragungsweges sequentiell hintereinander angeordnet miteinander verbunden sein, wobei der solche signalübertragungsbezogene Anordnung nicht zwingend mit einer räumlichen Anordnung der Feldgeräte korrelieren muss. Die Mehrzahl von Feldgeräten wird dabei in zwei Gruppen aufgeteilt. Jede Gruppe umfasst wenigstens ein Feldgerät. Auf einem Hinweg der Ringtopologie ausgehend von der Steuereinheit bis hin zu einem der Steuereinheit am entferntesten angeordneten Feldgerät sind nur die Feldgeräte der ersten Gruppe derart in die Ringtopologie eingebunden, dass ihren Treibern das Datenpaket zugeleitet wird. Die Feldgeräte der zweiten Gruppe hingegen sind nicht auf dem Hinweg sondern auf einem Rückweg der Ringtopologie ausgehend von dem der Steuereinheit am entferntesten angeordneten Feldgerät bis zu der Steuereinheit derart in die Ringtopologie eingebunden, dass ihren Treibern das Datenpaket zugeleitet wird.

Anders ausgedrückt soll das Feldbussystem mit seiner geschlossenen Ringtopologie und die darin aufgenommenen Feldgeräte derart ausgestaltet sein, dass zumindest ein oder einige Feldgeräte in die Ringtopologie auf einem Hinweg hin zu einem räumlich am weitesten von der Steuereinheit entfernten Feldgerät eingebunden sind und über ihren Treiber die ihnen zuzuordnenden Steuerdaten empfangen bzw. ihre Sensordaten weitergeben können, wohingegen zumindest ein oder einige andere Feldgeräte erst auf einem Rückweg von diesem am weitesten entfernten Feldgerät zurück zu der Steuereinheit in die Ringtopologie eingebunden sind und mithilfe ihrer Treiber entsprechende Signale aus dem übertragenen Summenrahmen-Datenpaket entnehmen bzw. in dieses einfügen können.

Dieser Ausführungsform liegt die Überlegung zugrunde, dass physikalische Signalweglängen innerhalb der Ringtopologie des Feldbussystems möglichst zwischen allen Teilnehmern dieser Ringtopologie ähnlich groß sein sollten.

Daher sollte vermieden werden, dass beispielsweise alle Feldgeräte auf einem Hinweg von der zentralen Steuereinheit hin zu dem am räumlich entferntesten angeordneten Feldgerät in die Ringtopologie integriert sind und mittels ihrer Treiber die Signale empfangen bzw. ausgeben können. In einem solchen Falle wäre ein Datenweg innerhalb der Ringtopologie von dem am entferntesten angeordneten Feldgerät zurück zu der zentralen Steuereinheit sehr lang. Eine Datenübertragung durch eine entsprechend lange Rückleitung zurück zu der zentralen Steuereinheit würde deutlich höhere Anforderungen an die Treiberbausteine, beispielsweise hinsichtlich ihrer Leistung, der erforderlichen Flankensteilheit und Flankendetektion, den Aufbau der Verbindungsleitungen, beispielsweise hinsichtlich Kabelimpedanz, Abschluss und Übersprechverhalten, stellen als eine Datenübertragung zwischen eng benachbarten anderen Feldgeräten. Treiberbausteine und Verbindungsleitungen, die höheren Anforderungen genügen sind in der Regel teurer als Treiberbausteine und Verbindungsleitungen, die geringeren Anforderungen genügen müssen. Unter "benachbarten" Feldgeräten sollen hier Feldgeräte verstanden werden, die räumlich oder örtlich benachbart angeordnet sind. Da eine gesamte Datenübertragung durch die Ringtopologie jedoch seriell erfolgt, würde eine solche lange dauernde Datenübertragung zwischen lediglich zwei Teilnehmern der Ringtopologie die gesamte Datenübertragungsrate innerhalb des Feldbussystems deutlich verlangsamen.

Es wird daher vorgeschlagen, zumindest ein oder einige der insgesamt in der Aufzuganlage vorgesehenen Feldgeräte einer zweiten Gruppe zuzuordnen und diese erst auf dem Rückweg der Topologie von dem der Steuereinheit am entferntesten angeordneten Feldgerät zurück zu der Steuereinheit in die Ringtopologie zu integrieren. Abstände zwischen einzelnen Teilnehmern der Ringtopologie, das heißt Längen von Datenübertragungswegen zwischen benachbarten Feldgeräten bzw. zwischen einem Feldgerät und der zentralen Steuereinheit könnten dadurch mehr oder minder vereinheitlicht werden. Eine Taktrate bei der Übertragung von Signalen innerhalb der Ringtopologie kann dann entsprechend erhöht werden.

Die erste Gruppe von Feldgeräten weist lediglich jedes zweite Feldgerät auf dem Weg der Ringtopologie von der Steuereinheit bis zu dem der Steuereinheit am entferntesten angeordneten Feldgerät auf. Insbesondere weist die erste Gruppe von Feldgeräten ein direkt benachbart zur Steuereinheit angeordnetes Feldgerät und davon ausgehend jedes in der Ringtopologie übernächste Feldgerät auf.

Mit anderen Worten werden zwischen der zentralen Steuereinheit und dem dieser am entferntesten angeordneten Feldgerät befindliche Feldgeräte abwechselnd der ersten und der zweiten Gruppe von Feldgeräten zugeordnet. Einander benachbarte Feldgeräte gehören somit verschiedenen Gruppen an. Anders ausgedrückt sind die Feldgeräte derart auf einen Hinweg und einen Rückweg der Ringtopologie verteilt in die Ringtopologie eingebunden, dass nur jedes zweite Feldgerät mit seinem Treiber ein Datenpaket auf einem Hinweg von der zentralen Steuereinheit hin zu einem dieser entferntest angeordneten Feldgerät erhält, wohingegen jedes zweite andere Feldgerät mit seinem Treiber auf einem Rückweg in die Ringtopologie eingebunden ist. Eine bei einer Signalübertragung zu überbrückende Weglänge zwischen zwei in die Ringtopologie eingebundenen Treibern von Feldgeräten kann auf diese Weise weitestgehend vereinheitlicht werden und minimiert werden. Dies ermöglicht hohe Taktraten bei einer Signalübertragung innerhalb der Ringtopologie. Signalübertragungsraten können auf diese Weise maximiert werden.

Gemäß einer Ausführungsform weist jedes Feldgerät wenigstens einen ersten, einen zweiten, einen dritten und einen vierten elektrischen Anschluss auf. In den Feldgeräten ist dabei der Treiber elektrisch mit dem ersten Anschluss und mit dem vierten Anschluss verbunden und der zweite Anschluss ist direkt durchschleifend mit dem dritten Anschluss elektrisch verbunden. In den Feldgeräten der ersten Gruppe ist der Treiber dabei dazu ausgelegt, das Datenpaket über den ersten Anschluss zu empfangen und das Datenpaket über den vierten Anschluss auszugeben, wohingegen in den Feldgeräten der zweiten Gruppe der Treiber dazu ausgelegt ist, das Datenpaket über den vierten Anschluss zu empfangen und das Datenpaket über den ersten Anschluss auszugeben. Der erste und der zweite Anschluss eines der Steuereinheit räumlich nächstliegenden Feldgeräts sind mit Anschlüssen der Steuereinheit verbunden. Bei jedem Feldgerät mit Ausnahme des der Steuereinheit am räumlich entferntesten angeordneten Feldgeräts ist der dritte Anschluss mit dem ersten Anschluss eines direkt benachbarten Feldgeräts und der vierte Anschluss mit dem zweiten Anschluss des direkt benachbarten Feldgeräts elektrisch verbunden. Bei dem der Steuereinheit am entferntesten angeordneten Feldgerät ist der dritte Anschluss mit dem vierten Anschluss desselben Feldgeräts elektrisch kurzschließend verbunden. Wie weiter unten in der Beschreibung bevorzugter Ausführungsformen unter Bezugnahme auf die beigefügten Figuren leichter zu erkennen, bedeutet dies mit anderen Worten, dass alle in die Ringtopologie des Feldbussystems integrierten Feldgeräte bezüglich der an ihnen vorzusehenden Anschlüsse in gleicher Weise aufgebaut sein können und benachbarte Feldgeräte jeweils in gleicher Weise elektrisch miteinander verbunden werden können. Insbesondere braucht bei die elektrische Verbindung etablierenden Kabeln zwischen benachbarten Feldgeräten keine Verdrillung oder Verschränkung vorgesehen zu werden. Dies kann eine Installation der Feldgeräte und der elektrischen Verbindungen zwischen den Feldgeräten erheblich vereinfachen und ein Risiko von Fehlverdrahtungen minimieren.

Allerdings können bzw. sollten sich in diesem Fall die in den Feldgeräten vorzusehenden Treiber und/oder eine Anordnung der Treiber der Feldgeräte der ersten Gruppe von Feldgeräten von denjenigen der Feldgeräte der zweiten Gruppe von Feldgeräten unterscheiden. Zwar sind die Treiber jeweils zwischen dem ersten und dem vierten Anschluss des Feldgeräts vorgesehen, eine Richtung, aus der die Treiber das Datenpaket empfangen und in die die Treiber das Datenpaket ausgeben sollen, unterscheidet sich jedoch. Während bei den Feldgeräten der ersten Gruppe die Treiber dazu ausgelegt sind, das Datenpaket über den ersten Anschluss zu empfangen und über den vierten Anschluss auszugeben, ist dies bei den Feldgeräten der zweiten Gruppe genau umgekehrt.

Um beispielsweise zu verhindern, dass Hardware-mäßig verschiedene Feldgeräte für die Aufzuganlage bereitgestellt werden müssen, was einen Herstellungs- und Logistikaufwand vergrößern würde, können die Feldgeräte gemäß einer Ausführungsform dazu ausgelegt sein, eine Datenübertragungsrichtung ihrer Treiber einstellbar umzukehren. Mit anderen Worten können an einem Feldgerät geeignete technische Vorkehrungen vorgesehen sein, mithilfe derer bewirkt werden kann, dass der Treiber des Feldgeräts Signale von dem ersten Anschluss empfängt und an den vierten Anschluss weitergibt und das Feldgerät somit zu der ersten Gruppe von Feldgeräten zu zählen ist oder dass der Treiber Signale von dem vierten Anschluss empfängt und an den ersten Anschluss ausgibt und somit das Feldgerät zu der zweiten Gruppe von Feldgeräten zu zählen ist.

Beispielsweise können die Feldgeräte über Schalter verfügen, um die Datenübertragungsrichtung ihrer Treiber einzustellen. Solche Schalter können beispielsweise als DIP-Schalter vorgesehen sein, die an einer in dem Feldgerät integrierten Leiterplatte angebracht sind, um die Datenübertragungsrichtung des zugehörigen Treibers je nach Bedarf in die eine oder andere Richtung schalten zu können. Alternativ können die Schalter auch in Form von Jumpern implementiert werden.

Eventuell können Feldgeräte bzw. deren Treiber auch dazu ausgelegt sein, eine Richtung, in der Sensordaten weitergeleitet bzw. aus der Steuerdaten empfangen werden sollen, selbsttätig zu erkennen und ihre Datenübertragungsrichtung dementsprechend selbsttätig modifizieren zu können.

Gemäß einer Ausführungsform können die Treiber eines Feldgeräts auf einer Leiterplatte bereitgestellt sein und die elektrischen Verbindungen zwischen den Treibern und den ersten bis vierten Anschlüssen dabei über Leiterbahnen der Leiterplatten erfolgen. Mit anderen Worten können die Treiber beispielsweise als entsprechend spezialisiert ausgebildete Bauelemente ausgebildet sein. Elektrische Anschlüsse der Treiber können dann über Leiterbahnen einer das jeweilige Bauelement tragenden Leiterplatte mit den von außen zugänglichen ersten bis vierten Anschlüssen des Feldgeräts verbunden werden, so dass der Treiber eines Feldgeräts über diese von außen zugänglichen Anschlüsse mit einem hiermit entsprechend verkabelten benachbarten Feldgerät elektrisch verbunden werden kann. Eine Datenübertragungsrichtung, in der der Treiber Signale entweder von dem ersten oder dem vierten Anschluss empfängt und entsprechend an den vierten bzw. ersten Anschluss weitergibt, kann in diesem Fall einfach realisiert werden, indem die Leiterbahnen auf der Leiterplatte geeignet konfiguriert werden.

Gemäß einer weiteren Ausführungsform weist jedes Feldgerät wiederum wenigstens einen ersten, einen zweiten, einen dritten und einen vierten elektrischen Anschluss auf. Anders als bei manchen der weiter oben geschilderten Ausführungsformen unterscheiden sich die Feldgeräte der ersten und der zweiten Gruppe jedoch in diesem Fall nicht zwingend voneinander. Stattdessen kann sowohl in den Feldgeräten der ersten Gruppe als auch in den Feldgeräten der zweiten Gruppe der Treiber elektrisch mit dem ersten Anschluss und mit dem dritten Anschluss verbunden sein und dazu ausgelegt sein, das Datenpaket über den ersten Anschluss zu empfangen und das Datenpaket über den dritten Anschluss auszugeben. Der zweite Anschluss ist dabei direkt durchschleifend mit dem vierten Anschluss elektrisch verbunden. Der erste und der zweite Anschluss eines der Steuereinheit nächstliegenden Feldgeräts sind dabei mit Anschlüssen der Steuereinheit verbunden. Jedes Feldgerät der ersten Gruppe, welches mit einem benachbarten Feldgerät der zweiten Gruppe verbunden ist, ist hierbei mit seinem dritten Anschluss mit dem vierten Anschluss des benachbarten Feldgeräts verbunden und mit seinem vierten Anschluss mit dem dritten Anschluss des benachbarten Feldgeräts verbunden, und/oder mit seinem ersten Anschluss mit dem zweiten Anschluss des benachbarten Feldgeräts verbunden und mit seinem zweiten Anschluss mit dem ersten Anschluss des benachbarten Feldgeräts verbunden.

Mit anderen Worten können bei dieser Ausführungsform die in der Aufzuganlage einzusetzenden Feldgeräte zwar alle gleich ausgebildet sein, das heißt die Feldgeräte der ersten Gruppe und die Feldgeräte der zweiten Gruppe können identisch ausgebildet sein. Um jedoch zu erreichen, dass die Feldgeräte der ersten Gruppe in die Ringtopologie auf dem Hinweg von der Steuereinheit zu dem entferntest angeordneten Feldgerät eingebunden sind, wohingegen die Feldgeräte der zweiten Gruppe auf einem entsprechenden Rückweg der Ringtopologie eingebunden sind, werden entsprechende elektrische Verbindungen zwischen benachbarten Feldgeräten unterschiedlicher Gruppen gekreuzt oder verschränkt ausgestaltet.

Eine Herstellung und eine Logistik bei der Bereitstellung von Feldgeräten kann daher, da nur ein Typ von Feldgeräten bereitgestellt werden braucht, vereinfacht sein. Allerdings kann eine Verdrahtung von benachbart angeordneten Feldgeräten innerhalb der Ringtopologie aufwendiger sein und muss mit Sorgfalt durchgeführt werden, da gegebenenfalls darauf geachtet werden muss, in welcher Konfiguration benachbarte Feldgeräte miteinander verdrahtet werden. Dies kann insbesondere dann zu einem erhöhten Verdrahtungsaufwand führen, wenn zusätzlich zu Verkabelungen zum Verbinden der ersten bis vierten Signal-übertragenden Anschlüsse auch weitere Verdrahtungen beispielsweise zur Energieversorgung von Feldgeräten vorgesehen sein sollen und ein elektrisches Verbinden von benachbarten Feldgeräten mittels einheitlicher Stecker vorgenommen werden soll.

Gemäß einer Ausführungsform bilden die Feldgeräte Teile eines Sicherheitskreises der Aufzuganlage. In einem Sicherheitskreis einer Aufzuganlage ist eine schnelle und zuverlässige Signalübermittlung oft besonders wichtig, so dass für diesen Einsatzzweck die hier vorgeschlagene Verwendung und spezielle Anpassung des Feldbussystems mit einer Ringtopologie und einem darin durchzuführenden Summenrahmenverfahren besonders vorteilhaft wirken kann.

Ferner kann die Steuereinheit als Sicherheitsüberwachungseinheit für die Aufzuganlage ausgebildet sein. Die als Sicherheitsüberwachungseinheit dienende Steuereinheit kann dabei sicherheitsrelevante Betriebsparameter der Aufzuganlage mithilfe der von den Feldgeräten übermittelten Sensorsignale überwachen bzw. sicherheitsrelevante Betriebszustände mithilfe der von den durch Steuersignale angesteuerten Aktoren umsetzen.

Zumindest einige der Feldgeräte können z.B. Türschalter zur Überwachung jeweils eines Schließzustandes von Türen der Aufzuganlage sein. Die Feldgeräte können hierbei beispielsweise "intelligente" Türschalter bilden. Beispielsweise kann jedes Feldgerät dazu ausgebildet sein, seine den Schließzustand widergebenden Daten an einer individuell für dieses Feldgerät vorgesehenen Position innerhalb eines Datenpakets einzufügen. Ferner kann das Feldgerät dazu ausgebildet sein, nicht nur zwischen zwei Zuständen, nämlich "Tür offen" und "Tür geschlossen" zu unterscheiden, sondern ergänzend weitere Informationen und Signale an die Steuereinheit übertragen können, beispielsweise hinsichtlich seiner Identität und/oder seines Betriebszustandes und/oder etwaig vorliegender Fehlfunktionen.

Es wird daraufhingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Aufzuganlage gemäß einer Ausführungsform der vorliegenden Erfindung.
Fig. 2 veranschaulicht Komponenten einer erfindungsgemäßen Aufzuganlage mit einem mit einer geschlossenen Ringtopologie ausgeführten Feldbussystem.
Fig. 3 und 4 veranschaulichen jeweils Komponenten einer erfindungsgemäßen Aufzuganlage mit einem Feldbussystem in Ringtopologie, bei denen Feldgeräte in eine erste und eine zweite Gruppen aufgeteilt sind und innerhalb der Feldgeräte eine verschränkte Leitungsführung vorgesehen ist.
Fig. 5 veranschaulicht Komponenten einer erfindungsgemäßen Aufzuganlage mit einem Feldbussystem in Ringtopologie bei denen Feldgeräte in eine erste und eine zweite Gruppen aufgeteilt sind und zwischen benachbarten Geräten eine verschränkte Leitungsführung vorgesehen ist.

Die Figuren sind lediglich schematisch und nicht maßstabsgetreu. Gleiche Bezugszeichen bezeichnen in den verschiedenen Figuren gleiche bzw. gleichwirkende Merkmale.

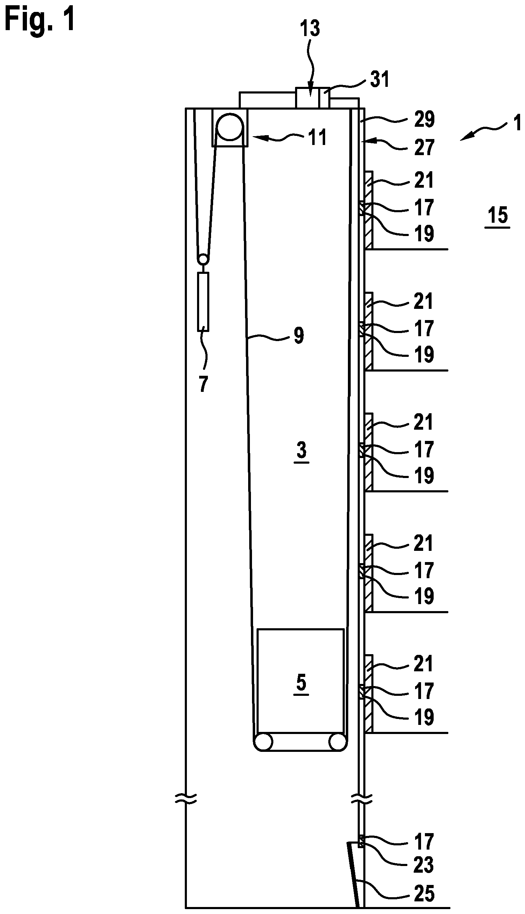

Fig. 1 zeigt eine erfindungsgemäße Aufzuganlage 1. Die Aufzuganlage 1 umfasst einen Aufzugschacht 3, in dem eine Aufzugskabine 5 und ein Gegengewicht 7 verfahren werden können. Die Aufzugskabine 5 und das Gegengewicht 7 sind hierzu an einem Seil- oder Riemen-artigen Tragmittel 9 gehalten, welches von einer Antriebsmaschine 11 verlagert werden kann. Eine Funktion der Aufzuganlage 1 und insbesondere eines Betriebs der Antriebsmaschine 11 kann mithilfe einer zentralen Steuereinheit 13 gesteuert werden.

Um eine korrekte Funktion und insbesondere eine Sicherheit der Aufzuganlage 1 gewährleisten zu können, sind in einem die Aufzuganlage 1 aufnehmenden Bauwerk 15 mehrere Feldgeräte 17 aufgenommen. Die Feldgeräte 17 sind dabei über das Bauwerk 15 hin verteilt angeordnet. Die Feldgeräte 17 können beispielsweise Türschalter 19 sein, welche einen Schließzustand von Türen 21, insbesondere von Stockwerktüren, der Aufzuganlage 1 überwachen können. Beispielsweise nahe einem Boden oder einer Grube des Aufzugschachts 3 kann ferner eine Leiter 25 gelagert sein, deren korrekt aufgeräumte Positionierung an einer Seitenwand des Aufzugschachts 3 beispielsweise mithilfe eines als Feldgerät 17 dienen überwachenden Schalters 23 überwacht wird. Die Feldgeräte 17 können Teil eines Sicherheitskreises 27 der Aufzuganlage 1 sein und beispielsweise über eine serielle Verkabelung 29 mit der zentralen Steuereinheit 13 bzw. insbesondere mit einer zum Beispiel dort integriert vorgesehenen Sicherheitsüberwachungseinheit 31 verbunden sein.

Jedes der Feldgeräte 17 ist dazu eingerichtet, von einem Sensor erzeugte Sensorsignale auszugeben und/oder von einem Aktor umzusetzende Steuersignale zu empfangen. Dabei kann ein Feldgerät 17 beispielsweise selbst einen Sensor und/oder einen Aktor aufweisen und die von dem Sensor erzeugten Sensorsignale über externe Anschlüsse an andere Geräte, insbesondere an die zentrale Steuereinheit, ausgeben bzw. über solche externen Anschlüsse von anderen Geräten, insbesondere der zentralen Steuereinheit 13, empfangene Steuersignale an den Aktor leiten, damit dieser die darin enthaltenen Steueranweisungen umsetzen kann. Alternativ kann ein Feldgerät 17 lediglich als Knotenpunkt dienen, der beispielsweise Sensorsignale von einem externen Sensor oder von einem anderen Feldgerät empfangen kann und diese dann an weitere Geräte ausgeben kann bzw. der von weiteren Geräten Steuersignale empfangen kann und diese dann an einen externen Aktor weitergibt, damit dieser die Steuersignale umsetzen kann.

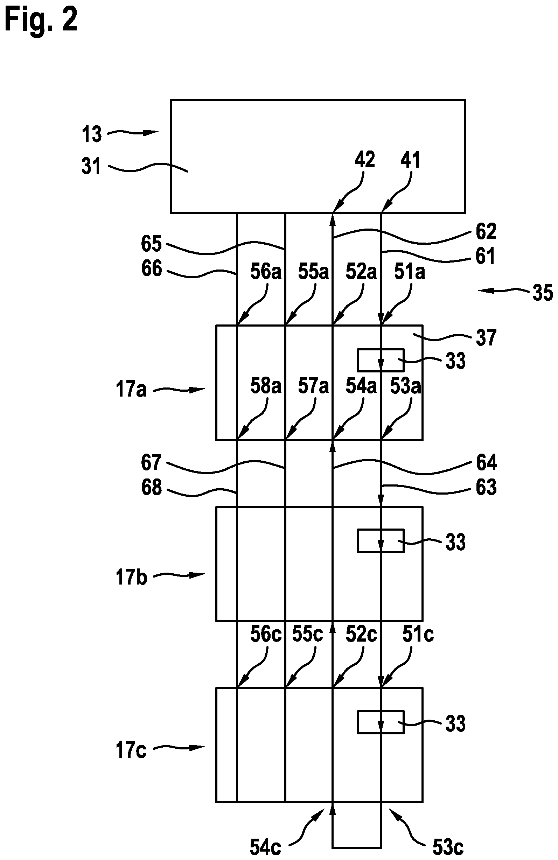

In den Fig. 2 bis 5 sind eine Sicherheitsüberwachungseinheit 31 als Teil einer zentralen Steuereinheit 13 sowie mehrere mit dieser elektrisch verbundene Feldgeräte 17a, 17b, 17c, 17d in verschiedenen Ausgestaltungen zur Verwendung in einer erfindungsgemäßen Aufzuganlage 1 dargestellt. Die Feldgeräte 17a, 17b, 17c, 17d sind dabei lediglich schematisch dargestellt.

Jedes Feldgerät 17a, 17b, 17c, 17d weist einen Treiber 33, 33' auf, mithilfe dessen Signale in ein dem Feldgerät 17a, 17b, 17c, 17d zugeführtes Datenpaket eingefügt werden können bzw. entnommen werden können. Mit anderen Worten kann ein Datenpaket, welches ein Feldgerät 17 erreicht hat, mithilfe des Treibers 33 beispielsweise um von einem Sensor erzeugte Sensorsignale ergänzt werden oder, ergänzend oder alternativ, von einem Aktor umzusetzende Steuersignale aus dem Datenpaket entnommen werden. Ein Treiber 33, 33' ist dabei typischerweise derart ausgelegt, dass er das Datenpaket aus einer Richtung kommend empfangen, dann die Signale in das Datenpaket einbringen und dann in eine andere Richtung ausgeben kann. Dies ist in den Figuren mit dem für die Treiber 33, 33' angegebenen Pfeil veranschaulicht.

Jedes Feldgerät 17a, 17b, 17c, 17d verfügt über zumindest vier vorzugsweise von außen her kontaktierbare Anschlüsse, das heißt einen ersten Anschluss 51a, 51b, 51c, 51d, einen zweiten Anschluss 52a, 52b, 52c, 52d, einen dritten Anschluss 53a, 53b, 53c, 53d und einen vierten Anschluss 54a, 54b, 54c, 54d. Jeweils zwei der Anschlüsse 51a, 51b, 51c, 51d - 54a, 54b, 54c, 54d -54 können zu Anschlusspaaren zusammengefasst sein. Über diese Anschlüsse können Datenpakete an das Feldgerät 17 übermittelt bzw. von diesem weitergegeben werden.

Zumindest einer dieser Anschlüsse steht derart mit dem Treiber 33, 33' in elektrischer Verbindung, dass von dort aus Datenpakete empfangen werden können, wohingegen zumindest ein weiterer der Anschlüsse derart mit dem Treiber 33, 33' elektrisch verbunden ist, dass von dem Treiber 33, 33' über diesen Anschluss das Datenpaket nach außen hin weitergesandt werden kann.

Bei der in Fig. 2 dargestellten Ausgestaltung sind beispielhaft drei Feldgeräte 17a, 17b, 17c mit der zentralen Steuereinheit 13 verbunden. Hierfür ist ein Feldbussystem 35 vorgesehen, welches eine Topologie aus elektrischen Leitungen 61, 62, 63, 64 zum Austausch von Sensorsignalen und/oder Steuersignalen zwischen der zentralen Steuereinheit 13 und den Feldgeräten 17a, 17b, 17c aufweist. Die Feldgeräte 17a, 17b, 17c, die zentrale Steuereinheit 13 sowie das Feldbussystem 35 sind dabei mit einer Ringtopologie dazu ausgelegt, um ein die Sensorsignale und/oder Steuersignale umfassendes Datenpaket seriell zwischen der zentralen Steuereinheit 13 und allen Feldgeräten 17a, 17b, 17c in einem Summenrahmenverfahren austauschen zu können.

Mit anderen Worten sind sowohl die Feldgeräte 17a, 17b, 17c einschließlich ihrer internen Verdrahtungen als auch die Leitungen 61, 62, 63, 64 des Feldbussystems derart ausgelegt, dass ein Datenpaket von der zentralen Steuereinheit 13 kommend seriell nacheinander durch alle Feldgeräte 17a, 17b, 17c geleitet wird und in den jeweiligen Treibern 33 eines der Feldgeräte 17a, 17b, 17c somit jeweils Sensorsignale in das Datenpaket eingefügt bzw. Steuersignale aus dem Datenpaket entnommen werden können, bevor das Datenpaket dann letztendlich aufgrund der geschlossenen Ringtopologie wieder zurück zu der Steuereinheit 13 geleitet wird.

Bei der in Fig. 2 dargestellten Ausführung erfolgt eine Implementierung der geschlossenen Ringtopologie dadurch, dass ein der zentralen Steuereinheit 13 nächstgelegenes Feldgerät 17a mit seinem ersten Anschluss 51a über eine erste elektrische Verbindung 61 mit einem Anschluss 41 der Steuereinheit 13 verbunden ist. Der mit diesem ersten Anschluss 51a elektrisch verbundene Treiber 33 kann somit ein Datenpaket von der Steuereinheit 13 empfangen und gegebenenfalls modifizieren, um es dann an den dritten Anschluss 53a des Feldgeräts 17a weiterzuleiten. Von dort aus kann es über eine weitere elektrische Leitung 63 an das benachbarte Feldgerät 17b geleitet werden, von wo aus es in ähnlicher Weise an ein der Steuereinheit 13 am entferntesten angeordnetes Feldgerät 17c weitergeleitet wird. Ein dritter Anschluss 53c dieses entferntest angeordneten Feldgeräts 17c wird dann elektrisch zurückschleifend mit einem vierten Anschluss 54c dieses Feldgeräts 17c verbunden. Da die vierten Anschlüsse 54a, 54b, 54c und die zweiten Anschlüsse 52a, 52b, 52c aller Feldgeräte 17a, 17b, 17c bei dieser Ausgestaltung direkt durchschleifend miteinander verbunden sind und zwischen benachbarten Feldgeräten 17a, 17b, 17c über entsprechende elektrische Leitungen verbunden sind, wird auf diese Weise die Ringtopologie bis hin zu der zentralen Steuereinheit 13 geschlossen.

Durch die spezielle Ausgestaltung der Feldgeräte 17a, 17b, 17c und des Feldbussystems 35 in einer geschlossenen Ringtopologie und den Einsatz des Summenrahmenverfahrens zur Übertragung von Datenpaketen durch diese Ringtopologie hindurch von einem zum nächsten Feldgerät 17a, 17b, 17c kann insgesamt eine schnelle und sichere Datenübermittlung von jedem der Feldgeräte 17a, 17b, 17c hin zu der zentralen Steuereinheit 13 und umgekehrt erreicht werden.

Das Vorsehen eines Feldbussystems ermöglicht ferner, dass einander benachbarte Feldgeräte 17a, 17b, 17c in sehr einfacher Weise miteinander elektrisch verbunden werden können. Insbesondere können einfache mehrpolige Kabelverbindungen zum Einrichten der elektrischen Verbindungen 61, 62, 63, 64 eingesetzt werden. Beispielsweise kann ein zweipoliges Kabel eine Verbindung zwischen den ersten und zweiten Anschlüssen 51a, 52a des Feldgeräts 17a und den Anschlüssen 41, 42 der Steuereinheit 13 bilden. Ein im Prinzip identisch ausgestaltetes zweipoliges Kabel kann auch die elektrischen Verbindungen 63, 64 zwischen den dritten und vierten Anschlüssen 53a, 54a des ersten Feldgeräts 17a und den ersten und zweiten Anschlüssen 51b, 52b des benachbarten zweiten Feldgeräts 17b bilden. Insgesamt können auf diese Weise alle Feldgeräte 17a, 17b, 17c mit einfachen mehrpoligen Kabeln und gegebenenfalls jeweils identischen, an den Kabelenden angebrachten Steckverbindern miteinander verbunden werden.

Gegebenenfalls können an den Feldgeräten 17a, 17b, 17c weitere Anschlüsse 55, 56, 57, 58 vorgesehen sein, über die zur Stromversorgung dienende elektrische Leitungen 65, 66, 67, 68 an die Feldgeräte 17a, 17b, 17c angeschlossen werden können. In diesem Fall können einfache 4-polige Kabel benachbarte Feldgeräte 17a, 17b, 17c miteinander verbinden. An den Enden solcher 4-poliger Kabel können beispielsweise Steckverbinder mit vier zu den zusammengehörigen Anschlüssen 51a, 51c; 52a, 52c; 55a, 55c; 56a, 56c; bzw. den zusammengehörigen Anschlüssen 53a, 54a, 57a, 58a passenden Gegenanschlüssen vorgesehen sein.

Allerdings kann sich bei der in Fig. 2 dargestellten Ausgestaltung ein Problem dahingehend ergeben, dass ein Datenpaket, welches in dem der zentralen Steuereinheit 13 am entferntesten gelegenen Feldgerät 17c verarbeitet wurde, einen relativ langen Weg zurück zu der zentralen Steuereinheit 13 nehmen muss. Insbesondere bei Anwendungsfällen in Aufzuganlagen 1 für hohe Gebäude, in denen beispielsweise Türschalter 19 an einer Vielzahl von Stockwerktüren 21 entlang des Aufzugschachts 3 über viele zig Meter oder gar hunderte Meter verteilt angeordnet sind, kann eine solche Datenpaket-Rückübermittlung von dem entferntest angeordneten Feldgerät 17c zur zentralen Steuereinheit 13 über eine verhältnismäßig lange Leitung erfolgen. Insbesondere stellt eine solche Datenpaket-Übertragung höhere Anforderungen an die Verbindungsleitungen und an das zeitliche Verhalten als die Datenpaket-Übertragungen zwischen direkt benachbarten Feldgeräten 17a, 17b, 17c auf einem Hinweg hin zu dem am entferntesten angeordneten Feldgerät 17c. Da eine Datenübertragung innerhalb des Feldbussystems 35 im Allgemeinen gleichmäßig getaktet werden muss, kann eine einzelne derart lang benötigende Datenpaket-Rückübertragung von dem am entferntesten angeordneten Feldgerät 17c eine gesamte Datenübertragungsrate innerhalb des Feldbussystems verlangsamen.

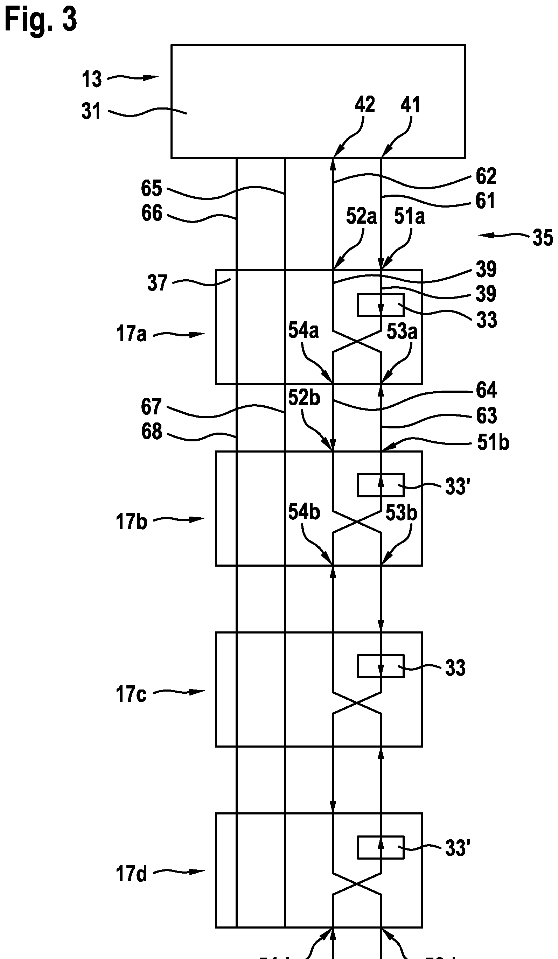

Aus diesem Grund werden alternative geschlossene Ringtopologien vorgeschlagen, wie sie beispielhaft in den Fig. 3 bis 5 dargestellt sind.

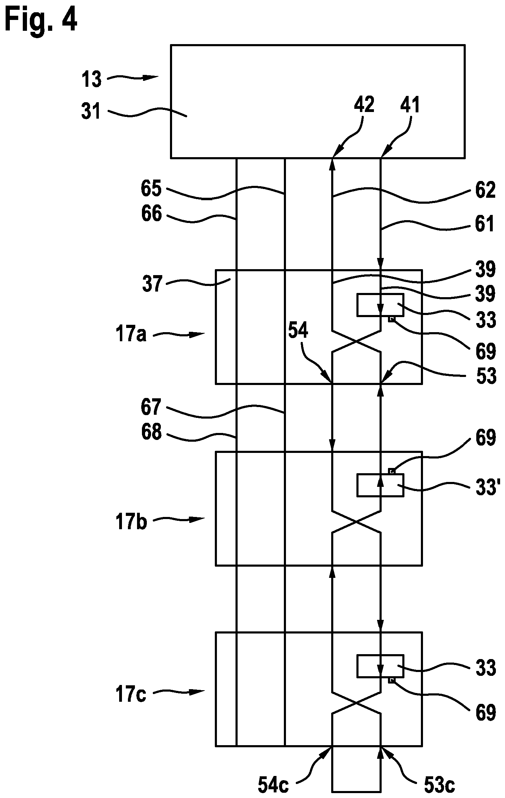

Bei den in den Fig. 3 und 4 dargestellten Ausgestaltungen sind, ähnlich wie bei der Ausgestaltung in Fig. 2, mehrere Feldgeräte 17a, 17b, 17c, 17d in einer Sequenz hintereinander angeordnet. Die Ausgestaltungen der Fig. 3 und 4 unterscheiden sich dabei hauptsächlich hinsichtlich der Anzahl von Feldgeräten, wobei Fig. 3 eine gerade Anzahl von Feldgeräten und Fig. 4 eine ungerade Anzahl von Feldgeräten beispielhaft wiedergibt.

Im Gegensatz zu der Ausgestaltung aus Fig. 2 sind hier jedoch nicht alle Feldgeräte 17a, 17b, 17c, 17d gleich ausgebildet und miteinander elektrisch verbunden. Stattdessen können die Feldgeräte 17a, 17b, 17c, 17d in zwei Gruppen unterteilt angesehen werden. Bei einer ersten Gruppe, welche in den Beispielen die Feldgeräte 17a und 17c umfasst, sind die Feldgeräte 17a, 17c auf einem Hinweg der Ringtopologie von der Steuereinheit 13 bis zu einem der Steuereinheit 13 am entferntesten angeordneten Feldgerät 17d in Fig. 3 und 17c in Fig. 4 derart in die Ringtopologie eingebunden, dass ihren Treibern 33 das Datenpaket zugeleitet wird. Eine zweite Gruppe von Feldgeräten 17b (und in Fig. 3 auch 17d) ist in einen Rückweg der Ringtopologie von dem der Steuereinheit 13 am entferntesten angeordneten Feldgerät 17d bzw. 17c bis zur Steuereinheit 13 in die Ringtopologie eingebunden, so dass ihren Treibern 33' das Datenpaket erst auf diesem Rückweg zugeleitet wird. Die erste Gruppe von Feldgeräten umfasst dabei räumlich gesehen jedes zweite Feldgerät 17a, 17c auf dem Hinweg der Ringtopologie von der Steuereinheit 13 bis zu dem dieser Steuereinheit 13 am entferntesten angeordneten Feldgerät 17d bzw. 17c, wohingegen die zweite Gruppe die übrigen Feldgeräte 17b (und gegebenenfalls 17d) auf dem Rückweg der Ringtopologie umfasst. Zwischen zwei in den Hinweg der Ringtopologie eingebundenen Feldgeräten 17a, 17c ist somit jeweils ein in den Rückweg der Ringtopologie eingebundenes Feldgerät 17b aufgenommen.

Bei den in den Fig. 3 und 4 dargestellten Ausgestaltungen findet dabei eine Art Verkreuzung oder Verschränkung zwischen dem ersten und zweiten Anschluss 51a, 51b, 51c, 51d des Feldgeräts 17a, 17b, 17c, 17 deinerseits und dem dritten und dem vierten Anschluss 53, 54 des Feldgeräts 17 andererseits statt. Die Feldgeräte 17a, 17c der ersten Gruppe sind dabei derart ausgestaltet, dass ihr Treiber 33 das Datenpaket über den ersten Anschluss 51 empfangen und das Datenpaket über den vierten Anschluss 54 wieder ausgeben kann. Die Feldgeräte 17b, 17d der zweiten Gruppe sind derart ausgestaltet, dass ihr Treiber das Datenpaket über den vierten Ausgang 54 empfangen kann und das Datenpaket über den ersten Anschluss 51 ausgeben kann. Mit anderen Worten findet in den Feldgeräten 17a, 17c der ersten Gruppe eine Datenübertragung durch den Treiber 33 genau in einer entgegengesetzten Richtung statt als in den Feldgeräten 17b, 17d der zweiten Gruppe mit ihren Treibern 33'.

Die nicht mit den Treibern 33, 33' elektrisch verbundenen zweiten und dritten Anschlüsse 52a, 52b, 52c, 52d ; 53a, 53b, 53c, 53d sind direkt durchschleifend miteinander verbunden, so dass Datenpakete hier zwischen den zweiten und dritten Anschlüssen transferiert werden können, ohne von einem Treiber 33, 33' modifiziert zu werden.

Eine Verkreuzung oder Verschränkung von Signalleitungen zwischen den ersten und zweiten Anschlüssen 51a, 51b, 51c, 51d, 52a, 52b, 52c, 52d und den dritten und vierten Anschlüssen 53a, 53b, 53c, 53d, 54a, 54b, 54c, 54d eines Feldgeräts 17a, 17b, 17c, 17d kann innerhalb der Feldgeräte 17a, 17b, 17c, 17d implementiert sein. Die auf dem Hinweg der Ringtopologie anzubindenden Feldgeräte 17a, 17c der ersten Gruppe können sich dabei hinsichtlich einer internen Verdrahtung, hinsichtlich einer Datenübertragungsrichtung, in der ihre Treiber 33, 33' Daten zwischen den Anschlüssen bewegen können und/oder hinsichtlich einer geometrischen Ausgestaltung und/oder Anordnung der vier Kontakte 51a, 51b, 51c, 51d; 52a, 52b, 52c, 52d; 53a, 53b, 53c, 53d; 54a, 54b, 54c, 54d unterscheiden. Beispielsweise können die Treiber 33, 33' jeweils auf Leiterplatten 37 vorgesehen sein und eine elektrische Verbindung von Anschlüssen der Treiber 33, 33' mit den von außen her zugänglichen Anschlüssen 51a, 51b, 51c, 51d; 52a, 52b, 52c, 52d; 53a, 53b, 53c, 53d; 54a, 54b, 54c, 54d der Feldgeräte 17a, 17b, 17c, 17d kann mithilfe von auf der Leiterplatte 37 vorgesehenen Leiterbahnen 39 erfolgen.

Um nicht mehrere verschiedene Typen von Feldgeräten 17 für die beiden Gruppen von Feldgeräten herstellen und vorhalten zu müssen, kann vorgesehen sein, die Datenübertragungsrichtung eines Treibers 33 modifizierbar auszugestalten, beispielsweise mithilfe von Schaltern, insbesondere DIP-Schaltern 69 (lediglich beispielhaft in Fig. 4 dargestellt), und geeignet ausgelegten Verdrahtungen.

Eine Ausgestaltung der benachbarte Feldgeräte 17a, 17b, 17c, 17d miteinander elektrisch verbindenden Verdrahtungen bzw. Leitungen 61 - 68 kann in diesem Fall für alle Feldgeräte 17a, 17b, 17c, 17d identisch ausgeführt sein. Mit Ausnahme des ersten und des letzten Feldgeräts 17a, 17c (bzw. 17d) ist bei jedem Feldgerät 17b, 17c in Fig. 3 der erste und zweite Anschluss 51b, 51c in Fig. 3, 52b, 52c in Fig. 3 mit dem dritten und vierten Anschluss 53a, 53b in Fig. 3; 54a, 54b in Fig. 3 des benachbarten Feldgeräts 17a, 17b in Fig. 3 und der dritte und vierte Anschluss 53b, 53c in Fig. 3, 54b, 54c in Fig. 3 mit dem ersten und zweiten Anschluss 51c, 51d in Fig. 3 des auf der anderen Seite benachbarten Feldgeräts 17c, 17d in Fig. 3 verbunden. Der erste Anschluss 51a des ersten Feldgeräts 17a ist mit dem Anschluss 41 der Steuereinheit 13 und der zweite Anschluss 52a des ersten Feldgeräts 17a mit dem Anschluss 42 der Steuereinheit 13 verbunden. Der dritte Anschluss 53d, 53c in Fig. 3 des letzten Feldgeräts 17d, 17c in Fig. 3 ist mit seinem vierten Anschluss 54d, 54c in Fig. 3 verbunden.

Um die Ringtopologie aufzubauen, können somit alle Feldgeräte 17a, 17b, 17c, 17d beider Gruppen mit einheitlichen mehrpoligen Kabeln miteinander verbunden werden. Das kann eine Verkabelung einer Vielzahl von Feldgeräten 17a, 17b, 17c, 17d stark vereinfachen und kann Fehlern bei einer solchen Verkabelung vorbeugen.

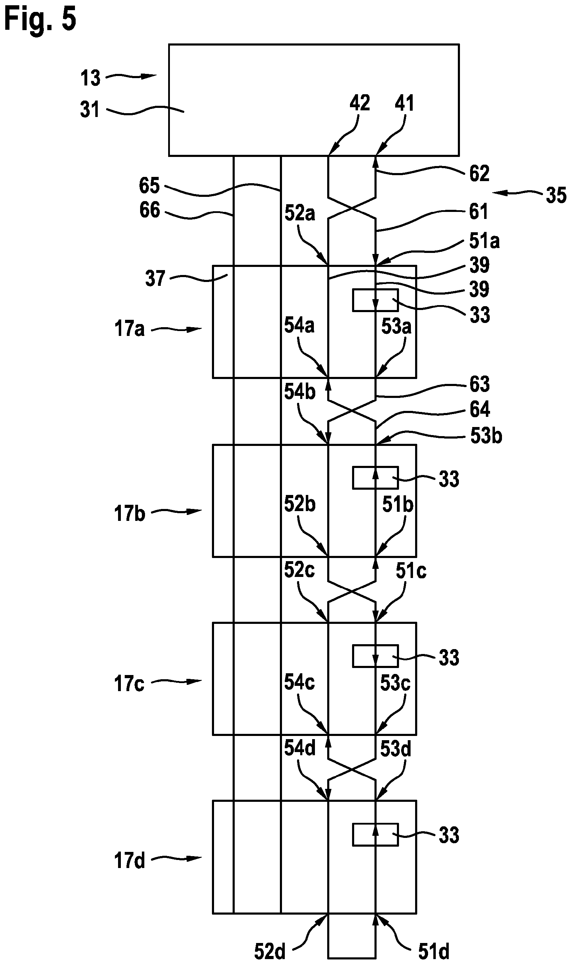

Fig. 5 veranschaulicht eine alternative Ausgestaltung einer mit einer Ringtopologie ausgebildeten Mehrzahl von Feldgeräten 17a, 17b, 17c, 17d zusammen mit einer zentralen Steuereinheit 13. Bei dieser Ausgestaltung können, ähnlich wie bei der in Fig. 2 dargestellten Ausgestaltung, alle Feldgeräte 17a, 17b, 17c, 17d identisch ausgestaltet sein, allerdings in unterschiedlichen Weisen, insbesondere mit unterschiedlichen Datenübertragungsrichtungen, in die Ringtopologie des Feldbussystems eingebunden sein. Außerdem ist auch hier nur jedes zweite Feldgerät 17a, 17c auf dem Hinweg in die Ringtopologie eingebunden, wohingegen jedes zweite andere Feldgerät 17b, 17d auf dem Rückweg dieser Ringtopologie eingebunden ist.

Eine hierfür notwendige Verschränkung von Signalleitungen erfolgt jedoch nicht, wie bei den in den Fig. 3 und 4 dargestellten Ausgestaltungen, innerhalb der Feldgeräte 17a, 17b, 17c, 17d. Stattdessen findet eine solche verschränkte bzw. sich kreuzende Leitungsführung in den benachbarte Feldgeräte 17a, 17b, 17c, 17d miteinander verbindenden Verdrahtungen bzw. Verbindungen 61 - 64 statt. Dabei ist jedes zweite Feldgerät 17a, 17b, 17c, 17d "gespiegelt" um eine waagrechte Achse in die Ringtopologie eingebunden.

Vorzugsweise werden auch hier wieder mehrpolige Kabel eingesetzt, um benachbarte Feldgeräte 17a, 17b, 17c, 17d miteinander zu verbinden. Allerdings sind zumindest die Leitungen 63, 64, welche den dritten und den vierten Anschluss 53a, 53c; 54a, 54c eines Feldgeräts 17a, 17c mit dem dritten und dem vierten Anschluss 53b, 53d; 54b, 54d eines benachbarten Feldgeräts 17b, 17d verbinden, nicht gerade durchgehend, sondern einmal verschränkt. Mit anderen Worten ist der dritte Anschluss 53a, 53c des einen Feldgeräts 17a, 17c nicht mit dem dritten Anschluss 53b, 53d des benachbarten Feldgeräts 17b, 17d und der vierte Anschluss 54a, 54c nicht mit dem vierten Anschluss 54b, 54d des benachbarten Feldgeräts 17b, 17d verbunden, sondern, nach einer Verschränkung der hierfür vorgesehenen Leitungen 63, 64, ist der dritte Anschluss 53a, 53c des einen Feldgeräts 17a, 17c mit dem vierten Anschluss 54b, 54d des benachbarten Feldgeräts 17b, 17d und der vierte Anschluss 54a, 54c des einen Feldgeräts 17a, 17c mit dem dritten Anschluss 53b, 53d des benachbarten Feldgeräts 17b, 17d verbunden.

Zusätzlich ist der erste Anschluss 51b des einen Feldgeräts 17b mit dem zweiten Anschluss 52c des benachbarten Feldgeräts 17c und der zweite Anschluss 52b des einen Feldgeräts 17b mit dem ersten Anschluss 51c des benachbarten Feldgeräts 17c verbunden, nach einer Verschränkung der hierfür vorgesehenen Leitungen.

Der erste Anschluss 51a des ersten Feldgeräts 17a ist mit dem Anschluss 42 der Steuereinheit 13 und der zweite Anschluss 52a des ersten Feldgeräts 17a mit dem Anschluss 41 der Steuereinheit 13 verbunden. Die Leitungen 61 und 62 sind dazu auch gekreuzt. Der erste Anschluss 51d des letzten Feldgeräts 17d ist mit seinem zweiten Anschluss 52d verbunden.

Die in Fig. 5 dargestellte Ausgestaltung kann dahingehend vorteilhaft sein, dass alle Feldgeräte 17a, 17b, 17c, 17d identisch ausgebildet sein können Allerdings muss dann bei einer Verdrahtung benachbarter Feldgeräte 17a, 17b, 17c, 17d darauf geachtet werden, dass eine korrekte Verschränkung der Leitungen 63, 64 vorgenommen wird, das heißt in der Praxis, dass beispielsweise Stecker richtig aufgesetzt werden und/oder ein geeignet verschränkter mehrpoliger Kabeltyp korrekt eingesetzt werden sollten.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste

- 1: Aufzuganlage
- 3: Aufzugschacht
- 5: Aufzugskabine
- 7: Gegengewicht
- 9: Tragmittel
- 11: Antriebsmaschine
- 13: zentrale Steuereinheit
- 15: Bauwerk
- 17: Feldgerät
- 19: Türschalter
- 21: Stockwerktür
- 23: Sicherungsschalter
- 25: Leiter
- 27: Sicherheitskreis
- 29: Verkabelung
- 31: Sicherheitsüberwachungseinheit
- 33: Treiber
- 33': umgekehrt gerichteter Treiber
- 35: Feldbussystem
- 37: Leiterplatte
- 39: Leiterbahn
- 41: erster Anschluss der Steuereinheit
- 42: zweiter Anschluss der Steuereinheit
- 51: erster Anschluss des Feldgeräts
- 52: zweiter Anschluss des Feldgeräts
- 53: dritter Anschluss des Feldgeräts
- 54: vierter Anschluss des Feldgeräts
- 61-68: elektrische Leitungen
- 69: DIP-Schalter

## Patentansprüche

1. Aufzuganlage (1) aufweisend:
eine zentrale Steuereinheit (13) zum Erzeugen von Steuersignalen und/oder zum Verarbeiten von Sensorsignalen und zum Steuern von Funktionen der Aufzuganlage (1);
eine Mehrzahl von Feldgeräten (17a, 17b, 17c, 17d), welche innerhalb eines die Aufzuganlage (1) aufnehmenden Bauwerks (15), insbesondere vorzugsweise entlang eines Aufzugschachts (3), verteilt angeordnet sind,
wobei jedes Feldgerät (17a, 17b, 17c, 17d) dazu eingerichtet ist, von einem Sensor erzeugte Sensorsignale auszugeben und/oder von einem Aktor umzusetzende Steuersignale zu empfangen;
ein Feldbussystem (35) mit einer Topologie aus elektrischen Leitungen (61 - 68) zum Austausch von Sensorsignalen und/oder Steuersignalen zwischen der zentralen Steuereinheit (13) und den Feldgeräten (17a, 17b, 17c, 17d);
wobei die Feldgeräte (17a, 17b, 17c, 17d), die zentrale Steuereinheit (13) und das Feldbussystem (35) mit einer geschlossenen Ringtopologie dazu ausgelegt sind, um ein die Sensorsignale und/oder Steuersignale umfassendes Datenpaket seriell zwischen der zentralen Steuereinheit (13) und allen Feldgeräten (17a, 17b, 17c, 17d) in einem Summenrahmenverfahren auszutauschen;
wobei jedes der Feldgeräte (17a, 17b, 17c, 17d) einen Treiber (33, 33') aufweist, um die Sensorsignale in das Datenpaket einzufügen bzw. um die Steuersignale aus dem Datenpaket zu entnehmen.
wobei die Feldgeräte (17a, 17b, 17c, 17d) in einer Sequenz hintereinander angeordnet sind,
wobei die Mehrzahl von Feldgeräten (17a, 17b, 17c, 17d) in eine wenigstens ein Feldgerät umfassende erste Gruppe (17a, 17c) und eine wenigstens ein Feldgerät umfassende zweite Gruppe (17b, 17d) aufgeteilt ist,
wobei auf einem Hinweg der Ringtopologie von der Steuereinheit (13) bis zu einem der Steuereinheit am entferntesten angeordneten Feldgerät (17c; 17d) nur die Feldgeräte (17a, 17c) der ersten Gruppe derart in die Ringtopologie eingebunden sind, dass ihren Treibern (33) das Datenpaket zugeleitet wird,
wohingegen die Feldgeräte (17b, 17d) der zweiten Gruppe auf einem Rückweg der Ringtopologie von dem der Steuereinheit (13) am entferntesten angeordneten Feldgerät (17c, 17d) bis zur Steuereinheit (13) derart in die Ringtopologie eingebunden sind, dass ihren Treibern (33') das Datenpaket zugeleitet wird.
wobei die erste Gruppe von Feldgeräten lediglich jedes zweite Feldgerät (17a, 17c) auf dem Weg der Ringtopologie von der Steuereinheit (13) bis zu dem der Steuereinheit am entferntesten angeordneten Feldgerät (17c, 17d) umfasst.

2. Aufzuganlage nach Anspruch 1,
wobei jedes Feldgerät (17a, 17b, 17c, 17d) wenigstens einen ersten, einen zweiten, einen dritten und einen vierten elektrischen Anschluss (51a, 51b, 51c, 51d; 52a, 52b, 52c, 52d; 53a, 53b, 53c, 53d; 54a, 54b, 54c, 54d) aufweist,
wobei in den Feldgeräten (17a, 17b, 17c, 17d) der Treiber (33, 33') elektrisch mit dem ersten Anschluss (51a, 51b, 51c, 51d) und mit dem vierten Anschluss (54a, 54b, 54c, 54d) verbunden ist und der zweite Anschluss (52a, 52b, 52c, 52d) direkt durchschleifend mit dem dritten Anschluss (53a, 53b, 53c, 53d) elektrisch verbunden ist,
wobei in den Feldgeräten (17a, 17c) der ersten Gruppe der Treiber (33) dazu ausgelegt ist, das Datenpaket über den ersten Anschluss (51a, 51c) zu empfangen und das Datenpaket über den vierten Anschluss (54a, 54c) auszugeben, und
wobei in den Feldgeräten (17b, 17d) der zweiten Gruppe der Treiber (33') dazu ausgelegt ist, das Datenpaket über den vierten Anschluss (54b, 54d) zu empfangen und das Datenpaket über den ersten Anschluss (51b, 51c) auszugeben, und
wobei der erste und der zweite Anschluss (51a, 52a) eines der Steuereinheit (13) nächstliegenden Feldgeräts (17a) mit Anschlüssen (41, 42) der Steuereinheit (13) verbunden sind;
wobei bei jedem Feldgerät (17a, 17b, 17c) mit Ausnahme des der Steuereinheit (13) am entferntesten angeordneten Feldgeräts (17c, 17d) der dritte Anschluss (53a, 53b, 53c) mit dem ersten Anschluss (51b, 51c, 51d) eines direkt benachbarten Feldgeräts (17b, 17c, 17d) und der vierte Anschluss (54a, 54b, 54c) mit dem zweiten Anschluss (52b, 52c, 52d) des direkt benachbarten Feldgeräts (17b, 17c, 17d) elektrisch verbunden ist;
wobei bei dem der Steuereinheit (13) am entferntesten angeordneten Feldgerät (17c, 17d) der dritte Anschluss (53c, 53d) mit dem vierten Anschluss (54c, 54d) desselben Feldgeräts (17c, 17d) elektrisch kurzschließend verbunden ist.

3. Aufzuganlage nach Anspruch 2, wobei sich die Treiber (33, 33') und/oder eine Anordnung der Treiber (33, 33') der Feldgeräte (17a, 17c) der ersten Gruppe von Feldgeräten von denjenigen der Feldgeräte (17b, 17d) der zweiten Gruppe von Feldgeräten unterscheiden.

4. Aufzuganlage nach einem der Ansprüche 2 und 3, wobei die Feldgeräte (17a, 17b, 17c) dazu ausgelegt sind, eine Datenübertragungsrichtung ihrer Treiber (33, 33') einstellbar umzukehren.

5. Aufzuganlage nach Anspruch 4, wobei die Feldgeräte (17a, 17b, 17c) über Schalter (69) verfügen, um die Datenübertragungsrichtung ihrer Treiber (33, 33') einzustellen.

6. Aufzuganlage nach Anspruch 1,
wobei jedes Feldgerät wenigstens einen ersten, einen zweiten, einen dritten und einen vierten elektrischen Anschluss (51a, 51b, 51c, 51d; 52a, 52b, 52c, 52d; 53a, 53b, 53c, 53d; 54a, 54b, 54c, 54d) aufweist,
wobei sowohl in den Feldgeräten (17a, 17c) der ersten Gruppe als auch in den Feldgeräten (17b, 17d) der zweiten Gruppe der Treiber (33) elektrisch mit dem ersten Anschluss (51a, 51b, 51c, 51d) und mit dem dritten Anschluss (53a, 53b, 53c, 53d) verbunden ist und dazu ausgelegt ist, das Datenpaket über den ersten Anschluss (51a, 51b, 51c, 51d) zu empfangen und das Datenpaket über den dritten Anschluss (53a, 53b, 53c, 53d) auszugeben, und der zweite Anschluss (52a, 52b, 52c, 52d) direkt durchschleifend mit dem vierten Anschluss (54a, 54b, 54c, 54d) elektrisch verbunden ist, wobei der erste und der zweite Anschluss (51a, 52a) eines der Steuereinheit (13) nächstliegenden Feldgeräts (17a) mit Anschlüssen (41, 42) der Steuereinheit (13) verbunden sind;
wobei jedes Feldgerät (17a, 17c) der ersten Gruppe, welches mit einem benachbarten Feldgerät (17b, 17d) der zweiten Gruppe verbunden ist,
- mit seinem dritten Anschluss (53a, 53c) mit dem vierten Anschluss (54b, 54d) des benachbarten Feldgeräts (17b, 17d) verbunden ist und mit seinem vierten Anschluss (54a, 54c) mit dem dritten Anschluss (53b, 53d) des benachbarten Feldgeräts (17b, 17d) verbunden ist, und/oder
- mit seinem ersten Anschluss (51a, 51c) mit dem zweiten Anschluss (52b, 52d) des benachbarten Feldgeräts (17b, 17d) verbunden ist und mit seinem zweiten Anschluss (52a, 52c) mit dem ersten Anschluss (51b, 51d) des benachbarten Feldgeräts (17b, 17d) verbunden ist.

7. Aufzuganlage nach Anspruch 6, wobei die Feldgeräte (17a, 17c) der ersten Gruppe und die Feldgeräte (17b, 17d) der zweiten Gruppe identisch ausgebildet sind.

8. Aufzuganlage nach einem der Ansprüche 1 bis 7, wobei die Feldgeräte (17a, 17b, 17c, 17d) Teile eines Sicherheitskreises (27) der Aufzuganlage (1) bilden.

9. Aufzuganlage nach einem der Ansprüche 1 bis 8, wobei die zentrale Steuereinheit (13) als Sicherheitsüberwachungseinheit (31) für die Aufzuganlage (1) ausgebildet ist.

10. Aufzuganlage nach einem der Ansprüche 1 bis 9, wobei zumindest einige der Feldgeräte (17a, 17b, 17c, 17d) Türschalter (19) zur Überwachung eines Schließzustandes von Türen (21) der Aufzuganlage (1) sind.

11. Aufzuganlage nach einem der Ansprüche 1 bis 10, wobei die Feldgeräte (17a, 17b, 17c, 17d) dazu ausgelegt sind, im Falle, dass eines der Feldgeräte (17a, 17b, 17c, 17d) Sensorsignale von einem Sensor ausgeben soll, die Sensorsignale in einer Weise bereitzustellen oder in das Datenpaket einzufügen, dass sie den Sensor identifizieren bzw. im Falle, dass eines der Feldgeräte (17a, 17b, 17c, 17d) von einem Aktor umzusetzende Steuersignale empfangen soll, den Aktor identifizierende Steuersignale aus dem Datenpaket aufzunehmen und auszuwerten.

12. Aufzuganlage nach einem der Ansprüche 1 bis 11, wobei die Feldgeräte (17a, 17b, 17c, 17d) dazu ausgelegt sind, zusätzlich zu den Sensorsignalen weitere Signale zu erzeugen bzw. zusätzlich zu den Steuersignalen weitere Signale aufzunehmen und auszuwerten.

13. Aufzuganlage nach einem der Ansprüche 1 bis 12, wobei der Treiber (33, 33') eines Feldgeräts (17a, 17b, 17c, 17d) auf einer Leiterplatte (37) bereitgestellt ist und wobei die elektrischen Verbindungen zwischen dem Treiber (33, 33') und den ersten bis vierten Anschlüssen (51a, 51b, 51c, 51d; 52a, 52b, 52c, 52d; 53a, 53b, 53c, 53d; 54a, 54b, 54c, 54d) über Leiterbahnen der Leiterplatte (37) erfolgen.

## Claims

1. Lift system (1), comprising:
a central control unit (13) for generating control signals and/or for processing sensor signals and for controlling functions of the lift system (1);
a plurality of field devices (17a, 17b, 17c, 17d) which are arranged in a distributed manner inside a structure (15) which accommodates the lift system (1), in particular preferably along a lift shaft (3),
wherein each field device (17a, 17b, 17c, 17d) is set up to output sensor signals generated by a sensor and/or to receive control signals to be implemented by an actuator;
a field bus system (35) having a topology of electrical lines (61-68) for interchanging sensor signals and/or control signals between the central control unit (13) and the field devices (17a, 17b, 17c, 17d);
wherein the field devices (17a, 17b, 17c, 17d), the central control unit (13), and the field bus system (35) are designed to interchange a data packet comprising the sensor signals and/or control signals in a serial manner between the central control unit (13) and all field devices (17a, 17b, 17c, 17d) in a summation frame method using a closed ring topology;
wherein each of the field devices (17a, 17b, 17c, 17d) has a driver (33, 33') in order to insert the sensor signals into the data packet or to remove the control signals from the data packet,
wherein the field devices (17a, 17b, 17c, 17d) are arranged one behind the other in a sequence,
wherein the plurality of field devices (17a, 17b, 17c, 17d) is divided into a first group (17a, 17c) comprising at least one field device, and a second group (17b, 17d) comprising at least one field device,
wherein, on an outbound path of the ring topology from the control unit (13) as far as a field device (17c; 17d) that is arranged furthest from the control unit, only the field devices (17a, 17c) of the first group are incorporated into the ring topology such that the data packet is supplied to the drivers thereof (33),
whereas the field devices (17b, 17d) of the second group are incorporated into the ring topology on a return path of the ring topology from the control unit (13) as far as a field device (17c; 17d) that is arranged furthest from the control unit (13), such that the data packet is supplied to the drivers thereof (33'),
wherein the first group of field devices comprises just every second field device (17a, 17c) on the path of the ring topology from the control unit (13) to the field device (17c, 17d) arranged furthest from the control unit.

2. The lift system according to claim 1,
wherein each field device (17a, 17b, 17c, 17d) comprises at least one first, one second, one third, and one fourth electrical terminal (51a, 51b, 51c, 51d; 52a, 52b, 52c, 52d; 53a, 53b, 53c, 53d; 54a, 54b, 54c, 54d),
wherein, in the field devices (17a, 17b, 17c, 17d), the driver (33, 33') is electrically connected to the first terminal (51a, 51b, 51c, 51d) and to the fourth terminal (54a, 54b, 54c, 54d), and the second terminal (52a, 52b, 52c, 52d) is electrically connected to the third terminal (53a, 53b, 53c, 53d) for direct feedthrough,
wherein, in the field devices (17a, 17c) of the first group, the driver (33) is designed to receive the data packet via the first terminal (51a, 51c) and to output the data packet via the fourth terminal (54a, 54c), and
wherein, in the field devices (17b, 17d) of the second group, the driver (33') is designed to receive the data packet via the fourth terminal (54b, 54d) and to output the data packet via the first terminal (51b, 51c), and
wherein the first and the second terminal (51a, 52a) of a field device (17a) that is closest to the control unit (13) are connected to terminals (41, 42) of the control unit (13); wherein, in each field device (17a, 17b, 17c) with the exception of the field device (17c, 17d) arranged furthest from the control unit (13), the third terminal (53a, 53b, 53c) is electrically connected to the first terminal (51b, 51c, 51d) of a directly adjacent field device (17b, 17c, 17d), and the fourth terminal (54a, 54b, 54c) is electrically connected to the second terminal (52b, 52c, 52d) of the directly adjacent field device (17b, 17c, 17d); wherein, in the field device (17c, 17d) arranged furthest from the control unit (13), the third terminal (53c, 53d) is connected to the fourth terminal (54c, 54d) of the same field device (17c, 17d) in an electrically shorting manner.

3. The lift system according to claim 2, wherein the drivers (33, 33') and/or an arrangement of the drivers (33, 33') of the field devices (17a, 17c) of the first group of field devices differ from those of the field devices (17b, 17d) of the second group of field devices.

4. The lift system according to either claim 2 or claim 3, wherein the field devices (17a, 17b, 17c) are designed to adjustably reverse the data transmission direction of the drivers (33, 33') thereof.

5. The lift system according to claim 4, wherein the field devices (17a, 17b, 17c) comprise switches (69) for adjusting the data transmission direction of the drivers (33, 33') thereof.

6. The lift system according to claim 1,
wherein each field device comprises at least one first, one second, one third, and one fourth electrical terminal (51a, 51b, 51c, 51d; 52a, 52b, 52c, 52d; 53a, 53b, 53c, 53d; 54a, 54b, 54c, 54d),
wherein, both in the field devices (17a, 17c) of the first group and in the field devices (17b, 17d) of the second group, the driver (33) is electrically connected to the first terminal (51a, 51b, 51c, 51d) and to the third terminal (53a, 53b, 53c, 53d) and is designed to receive the data packet via the first terminal (51a, 51b, 51c, 51d) and to output the data packet via the third terminal (53a, 53b, 53c, 53d), and the second terminal (52a, 52b, 52c, 52d) is electrically connected to the fourth terminal (54a, 54b, 54c, 54d) for direct feedthrough,
wherein the first and the second terminal (51a, 52a) of a field device (17a) that is closest to the control unit (13) are connected to terminals (41, 42) of the control unit (13); wherein each field device (17a, 17c) of the first group which is connected to an adjacent field device (17b, 17d) of the second group
- is connected by the third terminal (53a, 53c) thereof to the fourth terminal (54b, 54d) of the adjacent field device (17b, 17d), and is connected by the fourth terminal (54a, 54c) thereof to the third terminal (53b, 53d) of the adjacent field device (17b, 17d), and/or
- is connected by the first terminal (51a, 51c) thereof to the second terminal (52b, 52d) of the adjacent field device (17b, 17d), and is connected by the second terminal (52a, 52c) thereof to the first terminal (51b, 51d) of the adjacent field device (17b, 17d).

7. The lift system according to claim 6, wherein the field devices (17a, 17c) of the first group and the field devices (17b, 17d) of the second group are designed identically.

8. The lift system according to any of claims 1 to 7, wherein the field devices (17a, 17b, 17c, 17d) form parts of a safety circuit (27) of the lift system (1).

9. The lift system according to any of claims 1 to 8, wherein the central control unit (13) is designed as a safety monitoring unit (31) for the lift system (1).

10. The lift system according to any of claims 1 to 9, wherein at least some of the field devices (17a, 17b, 17c, 17d) are door switches (19) for monitoring a closure state of doors (21) of the lift system (1).

11. The lift system according to any of claims 1 to 10, wherein, in the event of one of the field devices (17a, 17b, 17c, 17d) being intended to output sensor signals from a sensor, the field devices (17a, 17b, 17c, 17d) are designed to provide the sensor signals or to insert said signals into the data packet in such a way that said signals identify the sensor, or, in the event of one of the field devices (17a, 17b, 17c, 17d) being intended to receive control signals to be implemented by an actuator, the field devices are designed to receive and evaluate control signals from the data packet that identify the actuator.

12. The lift system according to any of claims 1 to 11, wherein the field devices (17a, 17b, 17c, 17d) are designed so as to generate further signals, in addition to the sensor signals, or so as to gather and evaluate further signals in addition to the control signals.

13. The lift system according to any of claims 1 to 12, wherein the driver (33, 33') of one field device (17a, 17b, 17c, 17d) is provided on a circuit board (37), and wherein the first to fourth terminals (51a, 51b, 51c, 51d; 52a, 52b, 52c, 52d; 53a, 53b, 53c, 53d; 54a, 54b, 54c, 54d) are electrically connected to the driver (33, 33') by means of conductive tracks of the circuit board (37).

## Revendications

1. Installation d'ascenseur (1) comportant :
une unité de commande (13) centrale destinée à générer des signaux de commande et/ou à traiter des signaux de capteur et à commander des fonctions de l'installation d'ascenseur (1) ;
une pluralité d'appareils de terrain (17a, 17b, 17c, 17d) répartis à l'intérieur d'un ouvrage (15) renfermant l'installation d'ascenseur (1), notamment de préférence le long d'une cage d'ascenseur (3), chaque appareil de terrain (17a, 17b, 17c 17d) étant configuré pour délivrer en sortie des signaux de capteur générés par un capteur et/ou pour recevoir des signaux de commande devant être convertis par un actionneur ;
un système de bus de terrain (35) présentant une topologie de lignes électriques (61 à 68) pour l'échange de signaux de capteur et/ou de signaux de commande entre l'unité de commande (13) centrale et les appareils de terrain (17a, 17b, 17c, 17d) ;
les appareils de terrain (17a, 17b, 17c, 17d), l'unité de commande (13) centrale et le système de bus de terrain (35) étant conçus avec une topologie en anneau fermé afin d'échanger en série un paquet de données, comprenant les signaux de capteur et/ou les signaux de commande, entre l'unité de commande (13) centrale et tous les appareils de terrain (17a, 17b, 17c, 17d), dans un procédé de trame de somme ;
chacun des appareils de terrain (17a, 17b, 17c, 17d) présentant un pilote (33, 33') pour insérer les signaux de capteur dans le paquet de données ou extraire les signaux de commande du paquet de données ;
les appareils de terrain (17a, 17b, 17c, 17d) étant disposés les uns derrière les autres dans une séquence, la pluralité d'appareils de terrain (17a, 17b, 17c, 17d) étant divisés en un premier groupe (17a, 17c) comprenant au moins un appareil de terrain et en un second groupe (17b, 17d) comprenant au moins un appareil de terrain, seuls les appareils de terrain (17a, 17c) du premier groupe étant intégrés dans la topologie en anneau sur un chemin aller de la topologie en anneau, lequel chemin aller va de l'unité de commande (13) à l'appareil de terrain (17c, 17d) le plus éloigné de l'unité de commande, de telle sorte que leurs pilotes (33) reçoivent le paquet de données, tandis que les appareils de terrain (17b, 17d) du second groupe sont intégrés dans la typologie en anneau sur un chemin retour de la topologie en anneau, lequel chemin retour va de l'appareil de terrain (17c, 17d) le plus éloigné de l'unité de commande (13) à l'unité de commande (13), de telle sorte que leurs pilotes (33') reçoivent le paquet de données ;
le premier groupe d'appareils de terrain comprenant uniquement chaque second appareil de terrain (17a, 17c) sur le chemin de la topologie en anneau, lequel chemin va de l'unité de commande (13) à l'appareil de terrain (17c, 17d) le plus éloigné de l'unité de commande.

2. Installation d'ascenseur selon la revendication 1,
dans laquelle chaque appareil de terrain (17a, 17b, 17c, 17d) comporte au moins une première, une deuxième, une troisième et une quatrième borne électrique (51a, 51b, 51c, 51d ; 52a, 52b, 52c, 52d ; 53a, 53b, 53c, 53d ; 54a, 54b, 54c, 54d),
le pilote (33, 33') contenu dans les appareils de terrain (17a, 17b, 17c, 17d) étant connecté électriquement à la première borne (51a, 51b, 51c, 51d) et à la quatrième borne (54a, 54b, 54c, 54d), et la deuxième borne (52a, 52b, 52c, 52d) étant directement connectée électriquement en boucle à la troisième borne (53a, 53b, 53c, 53d),
le pilote (33) étant conçu, dans les appareils de terrain (17a, 17c) du premier groupe, pour recevoir le paquet de données par l'intermédiaire de la première borne (51a, 51c) et pour délivrer en sortie le paquet de données par l'intermédiaire de la quatrième borne (54a, 54c), et
le pilote (33') étant conçu, dans les appareils de terrain (17b, 17d) du second groupe, pour recevoir le paquet de données par l'intermédiaire de la quatrième borne (54b, 54d) et pour délivrer en sortie le paquet de données par l'intermédiaire de la première borne (51b, 51c), et les première et deuxième bornes (51a, 52a) de l'appareil de terrain (17a) le plus proche de l'unité de commande (13) étant connectées aux bornes (41, 42) de l'unité de commande (13) ;
la troisième borne (53a, 53b, 53c) de chaque appareil de terrain (17a, 17b, 17c), à l'exception de l'appareil de terrain (17c, 17d) le plus éloigné de l'unité de commande (13), étant connectée électriquement à la première borne (51b, 51c, 51d) de l'appareil de terrain (17b, 17c, 17d) directement adjacent, et la quatrième borne (54a, 54b, 54c) de chaque appareil de terrain, à l'exception de l'appareil de terrain le plus éloigné de l'unité de commande, étant connectée électriquement à la deuxième borne (52b, 52c, 52d) de l'appareil de terrain (17b, 17c, 17d) directement adjacent ;
la troisième borne (53c, 53d) de l'appareil de terrain (17c, 17d) le plus éloigné de l'unité de commande (13) étant connectée électriquement en court-circuit à la quatrième borne (54c, 54d) du même appareil de terrain (17c, 17d).

3. Installation d'ascenseur selon la revendication 2, dans laquelle les pilotes (33, 33') et/ou un ensemble de pilotes (33, 33') des appareils de terrain (17a, 17c) du premier groupe d'appareils de terrain diffèrent de ceux des appareils de terrain (17b, 17d) du second groupe d'appareils de terrain.

4. Installation d'ascenseur selon l'une des revendications 2 et 3, dans laquelle les appareils de terrain (17a, 17b, 17c) sont conçus pour inverser de manière réglable un sens de transmission de données de leurs pilotes (33, 33').

5. Installation d'ascenseur selon la revendication 4, dans laquelle les appareils de terrain (17a, 17b, 17c) comportent des commutateurs (69) pour régler le sens de transmission de données de leurs pilotes (33, 33').

6. Installation d'ascenseur selon la revendication 1,
dans laquelle chaque appareil de terrain comporte au moins une première, une deuxième, une troisième et une quatrième borne électrique (51a, 51b, 51c, 51d ; 52a, 52b, 52c, 52d ; 53a, 53b, 53c, 53d ; 54a, 54b, 54c, 54d),
le pilote (33), aussi bien des appareils de terrain (17a, 17c) du premier groupe que des appareils de terrain (17b, 17d) du second groupe, étant connecté électriquement à la première borne (51a, 51b, 51c, 51d) et à la troisième borne (53a, 53b, 53c, 53d), et étant conçu pour recevoir le paquet de données par l'intermédiaire de la première borne (51a, 51b, 51c, 51d) et pour délivrer en sortie le paquet de données par l'intermédiaire de la troisième borne (53a, 53b, 53c, 53d), et la deuxième borne (52a, 52b, 52c, 52d), aussi bien des appareils de terrain du premier groupe que des appareils de terrain du second groupe, étant directement connectée électriquement en boucle à la quatrième borne (54a, 54b, 54c, 54d), la première et la deuxième borne (51a, 52a) de l'appareil de terrain (17a) le plus proche de l'unité de commande (13) étant connectées aux bornes (41, 42) de l'unité de commande (13) ;
chaque appareil de terrain (17a, 17c) du premier groupe, lequel appareil est connecté à un appareil de terrain (17b, 17d) adjacent du second groupe,
- étant connecté avec sa troisième borne (53a, 53c) à la quatrième borne (54b, 54d) de l'appareil de terrain (17b, 17d) adjacent, et avec sa quatrième borne (54a, 54c) à la troisième borne (53b, 53d) de l'appareil de terrain (17b, 17d) adjacent, et/ou
- étant connecté avec sa première borne (51a, 51c) à la deuxième borne (52b, 52d) de l'appareil de terrain (17b, 17d) adjacent, et avec sa deuxième borne (52a, 52c) à la première borne (51b, 51d) de l'appareil de terrain (17b, 17d) adjacent.

7. Installation d'ascenseur selon la revendication 6, dans laquelle les appareils de terrain (17a, 17c) du premier groupe et les appareils de terrain (17b, 17d) du second groupe sont réalisés de manière identique.

8. Installation d'ascenseur selon l'une des revendications 1 à 7, dans laquelle les appareils de terrain (17a, 17b, 17c, 17d) font partie d'un circuit de sécurité (27) de l'installation d'ascenseur (1).

9. Installation d'ascenseur selon l'une des revendications 1 à 8, dans laquelle l'unité de commande (13) centrale est réalisée sous la forme d'une unité de surveillance de sécurité (31) pour l'installation d'ascenseur (1).

10. Installation d'ascenseur selon l'une des revendications 1 à 9, dans laquelle au moins certains des appareils de terrain (17a, 17b, 17c, 17d) sont des interrupteurs de porte (19) servant à contrôler un état fermé des portes (21) de l'installation d'ascenseur (1).

11. Installation d'ascenseur selon l'une des revendications 1 à 10, dans laquelle les appareils de terrain (17a, 17b, 17c, 17d) sont conçus, dans le cas où l'un des appareils de terrain (17a, 17b, 17c, 17d) doit émettre des signaux de capteur à partir d'un capteur, pour fournir les signaux de capteur ou pour les insérer dans le paquet de données de manière à identifier le capteur ou, dans le cas où l'un des appareils de terrain (17a, 17b, 17c, 17d) doit recevoir des signaux de commande devant être convertis par un actionneur, pour enregistrer et évaluer des signaux de commande identifiant l'actionneur à partir du paquet de données.

12. Installation d'ascenseur selon l'une des revendications 1 à 11, dans laquelle les appareils de terrain (17a, 17b, 17c, 17d) sont conçus pour générer d'autres signaux en plus des signaux de capteur, ou pour enregistrer et évaluer d'autres signaux en plus des signaux de commande.

13. Installation d'ascenseur selon l'une des revendications 1 à 12, dans laquelle le pilote (33, 33') d'un appareil de terrain (17a, 17b, 17c, 17d) est placé sur une carte de circuit imprimé (37), et dans laquelle les connexions électriques entre le pilote (33, 33') et les premières aux quatrièmes bornes (51a, 51b, 51c, 51d ; 52a, 52b, 52c, 52d ; 53a, 53b, 53c, 53d ; 54a, 54b, 54c, 54d) s'effectuent par l'intermédiaire de pistes conductrices sur la carte de circuit imprimé (37).
